# EUROPÄISCHE PATENTSCHRIFT

(11) **EP 1 108 283 B1**
(45) Veröffentlichungstag und Bekanntmachung des Hinweises auf die Patenterteilung: **07.05.2003**
(21) Anmeldenummer: 99932819.8
(22) Anmeldetag: 05.07.1999
(51) Int. Cl.: H02K 33/18, H02K 33/02, H01F 7/10

(54) **ELEKTROMAGNETISCHER AKTUATOR MIT SCHWINGENDEM FEDER-MASSE-SYSTEM**
ELECTROMAGNETIC ACTUATOR WITH AN OSCILLATING SPRING-MASS SYSTEM
ACTIONNEUR ELECTROMAGNETIQUE DOTE D'UN SYSTEME RESSORT-MASSE OSCILLANT

(30) Priorität: 29.08.1998 DE 19839464
(43) Veröffentlichungstag der Anmeldung: 20.06.2001
(73) Patentinhaber: ContiTech Vibration Control GmbH, 30165 Hannover (DE)
(72) Erfinder: HARTWIG, Christoph, D-30519 Hannover (DE); PREUSSLER, Stefan, D-31535 Neustadt (DE); HOFMANN, Maik, D-31789 Hameln (DE); KARKOSCH, Hans-Jürgen, D-30966 Hemmingen (DE)
(74) Vertreter: Schneider, Egon
(86) Internationale Anmeldenummer: EP9904662
(87) Internationale Veröffentlichungsnummer: WO00013297

(56) Entgegenhaltungen:
- DE-C- 4 301 845
- LEQUESNE ET AL.: "Permanent Magnet Linear Motors for Short Strokes" IEEE INDUSTRY APPLICATIONS SOCIETY ANNUAL MEETING, Bd. 1, 1992, Seiten 162-170, XP000368800 New York
- PATENT ABSTRACTS OF JAPAN vol. 5, no. 198 (E-087), 16. Dezember 1981 (1981-12-16) & JP 56 122107 A (MATSUSHITA ELECTRIC WORKS), 25. September 1981 (1981-09-25)
- CARLSON ET AL.: "Modeling and Analysis of a new Linear Actuator" RECORD OF THE IEEE INDUSTRY APPLICATIONS CONFERENCE , Bd. Conf.30, 8. - 12. Oktober 1995, Seiten 464-468, XP000550977 Orlando, US in der Anmeldung erwähnt

## Beschreibung

Die Erfindung betrifft einen Aktuator gemäß dem Oberbegriff des Anspruchs 1.

Derartige Aktuatoren enthalten ein schwingungsfähiges Masse-Federsystem, daß zu Schwingungen angeregt wird, wenn durch die elektrisch leitfähige Spule ein Wechselstrom getrieben wird. Die Aktuatoren werden zu den unterschiedlichsten Zwecken verwendet, beispielsweise als Linearmotoren in Pumpen, als Schwingungserzeuger oder als Schwingungstilger. Im zuletzt genannten Fall steht ein Aktuator der eingangs genannten Art mit einem schwingenden Bauteil in mechanischer Wirkverbindung und in dem Aktuator werden Schwingungen erzeugt, die den Schwingungen des Bauteils überlagert werden. Bei geeigneter Wahl von Amplitude, Frequenz und Phase der in dem Aktuator erzeugten Schwingungen werden die Schwingungen des Bauteils reduziert bzw. getilgt.

Aus der DE 43 01 845 C1 ist ein Aktuator bekannt, der als aktiver Schwingungstilger für ein in einer hin- und hergehenden Bewegung befindliches Maschinenteil verwendet wird. Der aktive Schwingungstilger umfaßt eine an dem Maschinenteil befestigte Tragplatte, auf der eine elektrisch leitfähige Tauchspule unbeweglich angeordnet ist. Die Tauchspule ist radial innen und radial außen von einem Topfmagneten konzentrisch umschlossen. Der Topfmagnet ist mit Hilfe von Federelementen federnd mit der Tragplatte des aktiven Schwingungstilgers verbunden und wird durch eine parallel zur Achse der Tauchspule ausgerichtete Führung geführt. Wird durch die elektrisch leitfähige Tauchspule ein Wechselstrom getrieben, so beginnt der Topfmagnet zu schwingen. Die Schwingungen des Topfmagneten werden den Schwingungen des Maschinenteils überlagert, so daß es zu einer Reduzierung bzw. zu einer Tilgung dieser kommt.

Der aus der DE 43 01 845 C1 bekannte aktive Schwingungstilger weist einen relativ einfachen Aufbau und ein weitgehend lineares Betriebsverhalten durch eine stets gleichbleibende Spaltbreite des Luftspalts, die durch die Führung des Topfmagneten gewährleistet wird, auf. Es ist jedoch festzustellen, daß die mit dem Topfmagneten erzeugbare Tilgerkraft in Relation zur Baugröße relativ klein ist, da in dem aktiven Schwingungstilger nur relativ kleine periodische Erregerkräfte erzeugbar sind und die Tilgerkraft proportional zur Amplitude der Erregerkraft ist. Als Erregerkraft wirkt in dem Schwingungstilger nämlich ausschließlich eine elektrodynamische Kraft, die bei einem Stromfluß durch die Tauchspule zwischen der Tauchspule und dem Topfmagneten entsteht. Da die in einem Schwingungstilger erzeugte Tilgerkraft ebenfalls proportional zu der Größe der schwingenden Masse ist, ließe sich dieses Problem grundsätzlich durch eine Vergrößerung des Topfmagneten lösen. Dafür steht jedoch nicht bei allen Anwendungen des aktiven Schwingungstilgers ein genügend großer Bauraum zur Verfügung. Das Problem ließe sich grundsätzlich ebenfalls dadurch lösen, daß man die Eigenfrequenz des schwingenden Feder-Masse-Systems in den zu tilgenden Frequenzbereich legt, da in diesem Fall die Amplitude der Trägheitsmasse bei entsprechend kleiner Dämpfung sehr große Werte annimmt. Je geringer die Dämpfung ist, desto kleiner wird jedoch auch die Bandbreite der gewünschten Resonanzüberhöhung, so daß man nur in einem kleinen Frequenzbereich große Tilgerkräfte hat. Zusammenfassend ist festzustellen, daß mit Hilfe des aus der DE 43 01 845 C1 bekannten aktiven Schwingungstilgers bei einem vorgegebenen Bauvolumen des schwingenden Systems (d.h. bei einer vorgegebenen Masse des Topfmagneten) nur relativ kleine Tilgerkräfte erzeugt werden können. Somit können auch nur relativ kleine Kräfte getilgt werden.

Aus dem Aufsatz *"Modeling and Analysis of a new Linear Actuator" von Renato Carlson, Nelson Sadowski, Alberto M. Beckert, Nelson J. Batistela (veröffentlicht bei der Industry Applications Conference 1995, 30. IAS Meeting IAS' 95, Conference Record of the 1995 IEEE, 8-12.10.1995, Orlando, Florida)* ist ein linearer Aktuator der eingangs genannten Art bekannt, der zwei quaderförmige Permanentmagneten aufweist, zwischen denen eine elektrisch leitfähige Spule angeordnet ist, die auf einen doppel T-förmigen Eisenkern gewickelt ist. Die Magnetisierung der Permanentmagnete weist auf die zwischen den Permanentmagneten angeordnete elektrisch leitfähige Spule und die - in Längsrichtung der Spule gesehen - oberen und unteren Flächen der Permanentmagnete sind mit Eisen bedeckt. Die beiden quaderförmigen Permanentmagnete sind wiederum zwischen zwei quaderförmigen Eisenblöcken angeordnet. Ferner sind die Permanentmagnete und die sie am oberen und unteren Ende bedeckende Flußleitstücke mit Hilfe von Spiralfedern federnd gelagert, wohingegen die übrigen Bestandteile des linearen Aktuators statisch gelagert sind. Wird durch die elektrisch leitfähige Spule ein Wechselstrom getrieben, so werden die federnd gelagerten Permanentmagnete zu Schwingungen angeregt.

In dem linearen Aktuator gemäß dem oben genannten Aufsatz können große äußere Erregerkräfte erzeugt werden, da zwischen den statisch gelagerten und federnd gelagerten Teilen des Aktuators neben elektrodynamischen Kräften zusätzlich magnetische Reluktanzkräfte wirken, wobei die genannten Kräfte alle in die gleiche Richtung wirken und sich zu einer großen Gesamtkraft addieren. Somit können in dem linearen Aktuator gemäß dem oben genannten Aufsatz bereits mit relativ kleinen Baugröße große Erregerkräfte erzeugt werden. Es ist jedoch festzustellen, daß der aus dem oben genannten Aufsatz bekannte lineare Aktuator einen komplizierten Aufbau aufweist, da er eine große Anzahl von Teilen enthält, die jeweils durch Luftspalte voneinander getrennt sind.

Der Erfindung liegt die Aufgabe zugrunde, einen Aktuator zu schaffen, der einen einfachen Aufbau aufweist und in dem große Erregerkräfte erzeugt werden können.

Die Aufgabe wird durch die Merkmale des Anspruchs 1 gelöst.

Die jeweils schwingend gelagerten Bauteile des Aktuators werden in Schwingungen versetzt, wenn durch die Spule des Aktuators ein Wechselstrom getrieben wird.

Der Aktuator kann neben den eingangs genannten Verwendungen dazu verwendet werden, in einem Kraftfahrzeug federnd gelagerte Massen zu Schwingungen anzuregen, mit dem Ziel, diese Schwingungen derart den störenden Schwingungen im Kraftfahrzeug zu überlagern, daß diese möglichst weitgehend getilgt werden. In diesem Fall wird also die Kraft, die die schwingende Masse des Aktuators erzeugt, als Erregerkraft für ein weiteres Feder-Masse-System genutzt. Da mit der schwingenden Masse des erfindungsgemäßen Aktuators große Erregerkräfte erzeugt werden, können in dem Kraftfahrzeug große Massen zu Schwingungen angeregt werden. Beispielsweise ist es möglich, die Batterie des Kraftfahrzeuges federnd zu lagern und mit Hilfe des Aktuators zu Schwingungen anzuregen.

Die mit der Erfindung erzielten Vorteile sind darin zu sehen, daß der Aktuator einen einfachen Aufbau aufweist, da er nur wenige Bestandteile enthält. So besteht der Aktuator im einfachsten Fall nur aus zwei Teilen, nämlich aus der um den Kern gewickelten Spule und aus dem Magneten, wobei eines der beiden Bestandteile des Aktuators federnd gelagert ist. Trotz dieses einfachen Aufbaus können innerhalb des Aktuators hohe Erregerkräfte erzeugt werden, da in dem Aktuator neben den elektrodynamischen Kräften auch gleichgerichtete magnetische Reluktanzkräfte wirken, wenn durch die elektrisch leitfähige Spule ein Wechselstrom getrieben wird (näheres siehe Figurenbeschreibung). Ein weiterer Vorteil der Erfindung ist darin zu sehen, daß der Aktuator nur einen Luftspalt zwischen dem bzw. den Magneten und der elektrisch leitfähigen Spule aufweist. Die Anzahl der Luftspalte ist also gegenüber den aus dem Aufsatz *"Modeling an Analysis of a new Linear Actuator"* bekannten Aktuatoren verringert. Aufgrund der geringen Anzahl der Luftspalte kommt es in dem Aktuator nur zu geringen Magnetfeldflußveriusten, so daß das erzeugte Magnetfeld also besser genutzt wird.

Gemäß einem ersten Ausführungsbeispiel der Erfindung nach Anspruch 2 enthält der Aktuator folgende Bestandteile:
- einen ringförmigen Magneten mit einer Magnetisierung in radialer Richtung
- eine elektrisch leitfähige Spule, deren Längsachse senkrecht zu der radialen Richtung der Magnetisierung angeordnet ist und die von dem ringförmigen Magneten konzentrisch derart umschlossen wird, daß zwischen dem Magneten und der Spule ein Luftspalt verbleibt.

Der Vorteil dieses Ausführungsbeispiels ist darin zu sehen, daß der Aktuator einen rotationssymmetrischen Aufbau zur Längsrichtung der Spule und lediglich einen ringförmigen Luftspalt zwischen dem Magneten und der Spule aufweist, so daß das Bauvolumen des Aktuators optimal genutzt wird. Ferner heben sich alle in radialer Richtung auf die Spule wirkenden Kräfte gegenseitig auf und es kommt nur zu geringen Magnetfeldverlusten. Darüber hinaus weist der Aktuator bei entsprechender Lagerung des Magneten bzw. der um den Kern gewickelten Spule ein weitgehend lineares Betriebsverhalten auf, da sich die Luftspaltbreite zwischen den Ringmagneten und der Spule dann nicht ändert. Bezüglich entsprechend ausgebildeter Lagerungen wird auf die Figurenbeschreibung verwiesen.

Gemäß einem zweiten Ausführungsbeispiel der Erfindung nach Anspruch 3 enthält der Aktuator folgende Bestandteile:
- zwei voneinander beabstandete weitgehend quaderförmige Magnete mit Stirnflächen, deren Flächennormale in die positive bzw. negative y-Richtung weisen, wobei die Magnetisierung des einen Magneten in die positive y-Richtung und die Magnetisierung des anderen Magneten in die negative y-Richtung weist und wobei jeder Magnet in einen ferromagnetischen Mantel hoher Permeabilität eingebettet ist, der die der Spule abgewandten Stimflächen des Magneten und die Flächen des Magneten, deren Flächennormalen in die positive bzw. negative z-Richtung weisen, zumindest bereichsweise bedeckt und
- eine elektrisch leitfähige Spule, deren Längsachse in z-Richtung (bzw. senkrecht zur y-Richtung) orientiert ist und durch die ein elektrischer Strom treibbar ist, wobei die Spule derartig zwischen den Magneten angeordnet ist, daß zwischen der Spule und jedem der beiden Magnete ein Luftspalt verbleibt.

Zur Beschreibung des zweiten Ausführungsbeispiels ist ein kartesisches Koordinatensystem eingeführt worden, um die Orientierung der einzelnen Bestandteile des Aktuators zu verdeutlichen. Hierbei wurde davon ausgegangen, daß die Magnetisierungsrichtung der Magnete die y-Richtung festlegen.

Ein Vorteil des zweiten Ausführungsbeispiels ist darin zu sehen, daß die Magnete des Aktuators einen einfachen quaderförmigen Aufbau aufweisen und somit einfach herzustellen sind. Ein weiterer Vorteil des Ausführungsbeispiels ist darin zu sehen, daß der Aktuator einen zur x-z-Ebene, in der die Längsachse der Spule liegt, symmetrischen Aufbau aufweist, so daß sich auch bei diesem Ausführungsbeispiel alle in y-Richtung auf die Spule wirkenden Kräfte gegenseitig aufheben, wenn die beiden Luftspalte zwischen jedem der Magnete und der Spule die gleiche Breite aufweisen. Darüber hinaus weist der Aktuator bei entsprechender Lagerung der Magnete bzw. der um den Kern gewickelten Spule ein weitgehend lineares Betriebsverhalten auf, da sich die Luftspaltbreite zwischen den Magneten und der Spule dann nicht ändert. Bezüglich entsprechend ausgebildeter Lagerungen wird auch hier auf die Figurenbeschreibung verwiesen.

Gemäß einer Weiterbildung der Erfindung nach Anspruch 4 ist die Spule des Aktuators durch einen regelbaren elektrischen Verbraucher, insbesondere durch einen regelbaren elektrischen Widerstand, kurzgeschlossen. Wird an den federnd gelagerten Bestandteilen des Aktuators gemäß dieser Weiterbildung eine Last befestigt, so wirkt der Aktuator als aktives Lager mit variabler Dämpfung für diese Last. Sobald nämlich die Last und damit die federnd gelagerten Bestandteile des Aktuators durch äußere Einflüsse in Schwingungen in Längsrichtung der Spule versetzt werden, wird aufgrund der bewegten Magnete und des sich dadurch zeitlich ständig ändernden Magnetfeldes, das die Spule durchsetzt, eine Spannung in der Spule induziert, die zu einem Stromfluß in der Spule führt. Die elektrische Energie wird in dem elektrischen Verbraucher, über den die Spule kurzgeschlossen ist, in andere Energieformen umgewandelt. Vorzugsweise wird als elektrischer Verbraucher ein regelbarer elektrischer Widerstand verwendet, in dem die elektrische Energie in Wärme umgewandelt wird. Durch die Umwandlung der Schwingungsenergie der Last in andere Energieformen, insbesondere in Wärme, wird die Schwingung der Last gedämpft. Das Maß der Dämpfung ist hierbei durch den regelbaren elektrischen Verbraucher einstellbar. Die Dämpfung ist z.B. um so höher, je größer der elektrische Widerstand vorgegeben wird. Als Last kommt beispielsweise der Motor eines Kraftfahrzeuges in Frage.

Vorzugsweise werden bei einem Aktuator gemäß Anspruch 4 die beweglichen Bestandteile des Aktuators mittels Elastomerlagern federnd gelagert, so wie in Anspruch 5 beansprucht ist. Alternativ können auch andere Tragfedern, z.B. aus Stahl oder einem glasfaserverstärkten Kunststoff verwendet werden.

Gemäß einer Weiterbildung der Erfindung nach Anspruch 6 sind der bzw. die Magnete statisch gelagert und die Spule inklusive des Kerns ist mit Hilfe von Spiralfedern, deren Längsrichtung in Richtung der Längsachse der Spule verlaufen, federnd gelagert. Bevorzugt sind die Spiralfedern konzentrisch zur Längsachse der Spule angeordnet.

Gemäß einer Weiterbildung der Erfindung nach Anspruch 7 sind der bzw. die Magnete statisch gelagert und die Spule inklusive des Kerns ist mit Hilfe von Blattfedern federnd gelagert. Der Vorteil dieser Weiterbildung ist darin zu sehen, daß Blattfedern wie Spiralfedern in einer Richtung "nachgiebig" sind, jedoch im Gegensatz zu Spiralfedern senkrecht zu dieser Richtung Kräfte aufnehmen können, ohne sich stark zu verformen. Die Blattfedern werden in dem Aktuator derart ausgerichtet, daß die Richtung der Blattfedern, in der diese weitgehend ohne Verformung Kräfte aufnehmen können, den bzw. die Luftspalte überbrückt (bzw. so, daß ihre nachgiebige Richtung in Richtung der Längsachse der Spule verläuft), so daß gewährleistet ist, daß die Breite des bzw. der Luftspalte im Betrieb des Aktuators weitgehend konstant bleibt.

Gemäß einer Weiterbildung der Erfindung nach Anspruch 8 ist, in Längsrichtung der Spule gesehen, oberhalb und unterhalb des Kerns mindestens eine Blattfeder angeordnet, die einerseits mit dem Kern in mechanischer Verbindung steht und andererseits in einem statischen Lager fest eingespannt ist. Die Längsrichtung der Blattfedern ist weitgehend senkrecht zur Längsachse der Spule ausgerichtet und kann ansonsten in eine beliebige Richtung verlaufen. Bei einem Aktuator gemäß dem zweiten Ausführungsbeispiel nach Anspruch 3 werden die Blattfedern jedoch vorzugsweise so ausgerichtet, daß ihre Längsrichtung in x-Richtung verläuft. Durch eine derartige Anordnung der Blattfedern ist gewährleistet, daß die Breite der Luftspalte zwischen der Spule und den Magneten, zwischen denen die Spule angeordnet ist, beim gesamten Schwingungsvorgang der Spule konstant bleibt.

Gemäß einer Weiterbildung der Erfindung nach Anspruch 9 ist, in Längsrichtung der Spule gesehen, oberhalb und unterhalb des Kerns mindestens eine Blattfeder angeordnet, die im mittleren Bereich mit dem Kern in mechanischer Verbindung steht und an beiden Enden eingespannt ist. Der Vorteil dieser Weiterbildung ist darin zu sehen, daß beim Betreiben des Aktuators kein resultierendes Drehmoment erzeugt wird. Gemäß einem ersten Ausführungsbeispiel der Weiterbildung nach Anspruch 10 ist jede Blattfeder an ihren Enden jeweils in einem Loslager eingespannt. Gemäß einem weiteren Ausführungsbeispiel der Weiterbildung nach Anspruch 11 ist jede Blattfeder an ihren Enden fest eingespannt und in ihrer Längsrichtung dehnbar.

Gemäß einer Weiterbildung der Erfindung nach Anspruch 12 ist, in Längsrichtung der Spule gesehen, oberhalb und unterhalb des Kerns jeweils ein Blattfedersystem angeordnet, das aus mindestens zwei Blattfedern 26, 28 besteht, die an ihren Enden miteinander in mechanischer Wirkverbindung stehen, wobei die jeweils eine Blattfeder 28 des Blattfedersystems mit dem Kern 10 und die jeweils andere Blattfeder 26 des Blattfedersystems mit einem Gehäuse 24 des Aktuators in mechanischer Wirkverbindung steht. Jedes der Blattfedersysteme wirkt in Längsrichtung der Spule wie eine Spiralfeder, ist senkrecht zu dieser Richtung jedoch weitgehend steif, so daß eine gleichbleibende Breite der Luftspalte auch im Betrieb gewährleistet ist.

Der Vorteil dieser Weiterbildung ist darin zu sehen, daß die Blattfedersysteme einen einfachen Aufbau aufweisen und auch im Betrieb des Aktuators keine resultierenden Drehmomente erzeugt werden.

Gemäß einer Weiterbildung der Erfindung nach Anspruch 13 ist sowohl die oberhalb als auch die unterhalb des Kerns angeordnete Blattfeder einerseits mit der Spule und andererseits mit der Spannungsquelle, durch die der Strom, der durch die Spule getrieben wird, erzeugt wird, elektrisch leitend verbunden. Der Vorteil dieser Weiterbildung ist darin zu sehen, daß die Spannungsquelle mit dem fest eingespannten Ende der Blattfeder verbunden werden kann. In diesem Fall wird die leitende Verbindung von der Spannungsquelle zu der Blattfeder auch dann nicht dynamisch belastet, wenn die Spule in Schwingungen versetzt wird. Auch die leitende Verbindung von der Blattfeder zu der Spule wird bei einer Schwingung der Spule nicht dynamisch belastet, da sich die Enden der leitenden Verbindung auch bei einem Schwingungsvorgang nicht relativ zueinander bewegen.

Gemäß einer Weiterbildung der Erfindung nach Anspruch 14 ist die Spule inklusive des Kerns statisch gelagert und der eingebettete bzw. die eingebetteten Magnete sind mit Hilfe von Blattfedern federnd gelagert.

Gemäß einer Weiterbildung der Erfindung nach Anspruch 15 ist bei einem Aktuator nach Anspruch 3, in Längsrichtung der Spule gesehen, oberhalb und unterhalb des Kerns mindestens eine Blattfeder angeordnet, deren eines Ende mit dem ersten Magnet in mechanischer Verbindung steht und deren anderes Ende mit dem zweiten Magnet in mechanischer Verbindung steht und die in ihrem mittleren Bereich fixiert ist.

Gemäß einer Weiterbildung der Erfindung nach Anspruch 16 bestehen der ferromagnetische Kern und die ferromagnetischen Mäntel aus ferromagnetischen Blechen mit hoher Permeabilität, die durch Isolierschichten voneinander getrennt sind. Der Vorteil dieser Weiterbildung ist darin zu sehen, daß sich innerhalb des ferromagnetischen Kerns und innerhalb der ferromagnetischen Mäntel keine starken Wirbelströme ausbilden können, wenn durch den ferromagnetischen Kern und durch die ferromagnetischen Mäntel ein sich zeitlich ändernder Magnetfluß geführt wird. Vielmehr sind die Wirbelströme auf die "Dicke" der Bleche begrenzt und demnach entsprechend schwach. Die Ohmschen Verluste innerhalb der ferromagnetischen Bleche und die infolgedessen entstehende Aufheizung der ferromagnetischen Bleche kann dementsprechend vernachlässigt werden. Ein weiterer Vorteil dieser Weiterbildung ist darin zu sehen, daß die Schwächung des durch die Spule erzeugten Magnetfeldes durch die Wirbelströme ebenfalls vernachläßigt werden kann. Gemäß einer Weiterbildung der Erfindung nach Anspruch 17 sind die Bleche aus Elektroblech oder aus Eisen.

Gemäß einer Weiterbildung der Erfindung nach Anspruch 18 sind der Magnet bzw. die Magnete als Permanentmagnete ausgebildet. Der Vorteil dieser Weiterbildung ist darin zu sehen, daß keine Stromzufuhr zu dem bzw. den Magneten benötigt wird, um ein Magnetfeld zu erzeugen. Gemäß einer Weiterbildung der Erfindung nach Anspruch 19 ist mindestens einer der Permanentmagnete als Seltenerdmagnet ausgebildet. Der Vorteil dieser Weiterbildung ist darin zu sehen, daß Seltenerdmagnete ein starkes Magnetfeld pro Magnetvolumen erzeugen, also eine hohe Energiedichte besitzen.

Gemäß einer Weiterbildung der Erfindung nach Anspruch 20 sind der bzw. die Magnete als Elektromagnete ausgebildet. Der Vorteil dieser Weiterbildung ist darin zu sehen, daß mit Hilfe von Elektromagneten besonders starke Magnetfelder erzeugt werden können.

Gemäß einer Weiterbildung der Erfindung nach Anspruch 21 ist der Kern, um den die Spule gewickelt ist, als doppel-T-förmiger Kern ausgebildet, dessen Längsachse in Längsrichtung der Spule liegt. Der Vorteil dieser Weiterbildung ist darin zu sehen, daß ein derartiger doppel-T-förmiger Kern besonders einfach hergestellt werden kann. Insbesondere ist es besonders einfach möglich, einen derartigen Kern aus ferromagnetischen Blechen mit hoher Permeabilität zu erzeugen, die durch Isolierschichten voneinander getrennt sind.

Ein Ausführungsbeispiel und weitere Vorteile der Erfindung werden im Zusammenhang mit den nachstehenden Figuren erläutert, darin zeigt:
Fig. 1 einen Aktuator im Längsschnitt,
Fig. 2a einen Aktuator im Längsschnitt,
Fig. 2b einen Aktuator im Querschnitt,
Fig. 3a einen Aktuator im Längsschnitt,
Fig. 3b einen Aktuator im Querschnitt,
Fig. 4 einen Aktuator im Längsschnitt,
Fig. 5 einen Aktuator im Längsschnitt,
Fig. 6 einen Aktuator im Längsschnitt,
Fig. 7 einen Aktuator im Längsschnitt,
Fig. 8a einen Aktuator im Längsschnitt,
Fig. 8b einen Ausschnitt aus einem Aktuator in perspektivischer Ansicht,
Fig. 9 einen Aktuator im Längsschnitt.

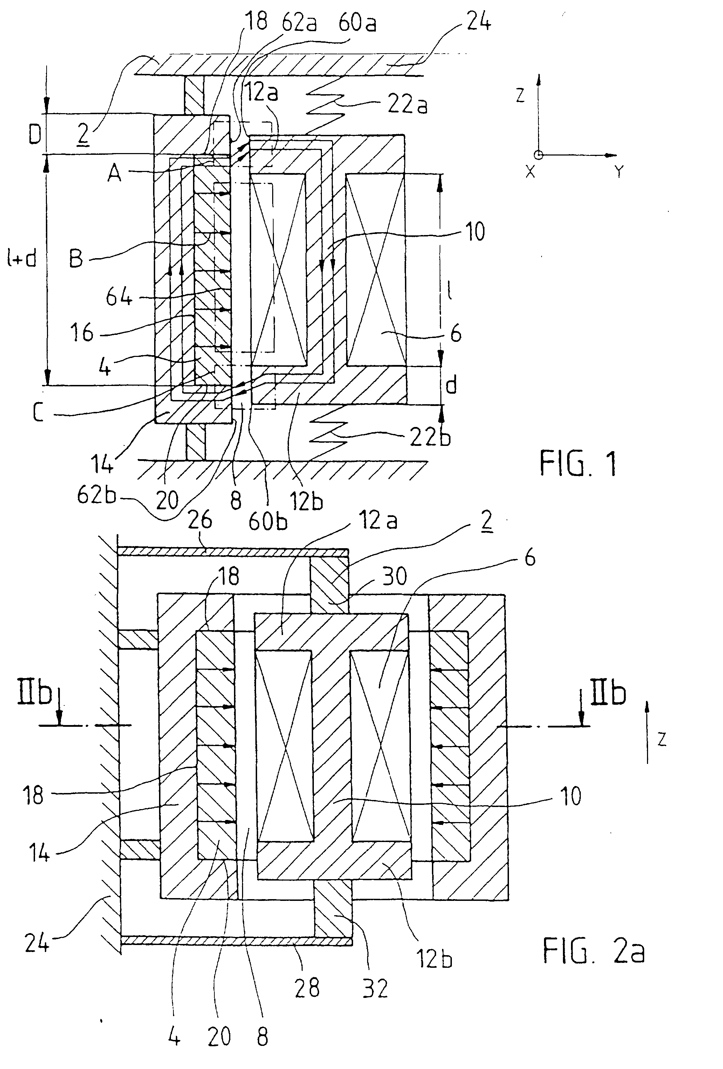

Figur 1 zeigt einen Aktuator 2 im Längsschnitt. Der Aktuator 2 enthält einen Magneten 4, der eine vorgegebene Magnetisierung aufweist, die in die positive y-Richtung weist. Der Aktuator 2 enthält ferner eine elektrisch leitfähige Spule 6, deren Längsachse in z-Richtung orientiert ist und somit weitgehend senkrecht zur Magnetisierungsrichtung des Magneten 4 steht. Die Spule 6 ist um einen ferromagnetischen Kern 10 hoher Permeabilität gewickelt, der, in Längsrichtung der Spule (d.h. z-Richtung) gesehen, oberhalb und unterhalb der Spule in kragenartigen Vorsprüngen 12a und 12b aus ferromagnetischem Material hoher Permeabilität endet. Die Spule 6 ist relativ zu dem Magneten 4 so angeordnet, daß zwischen den genannten Bestandteilen des Aktuators 2 ein schmaler Luftspalt 8 verbleibt. Der Magnet 4 ragt bei dem Ausführungsbeispiel gemäß Figur 1 im statischen Zustand des Aktuators in Längsrichtung der Spule 6 gesehen sowohl am oberen Ende als auch am unteren Ende über die Spule 6 hinaus. Dies gilt auch für alle Magnete der anderen Ausführungsbeispiele, die noch beschrieben werden.

Der Magnet 4 ist in einen ferromagnetischen Mantel 14 hoher Permeabilität eingebettet, der die der Spule 6 abgewandte Fläche 16 des Magneten 4 und, in Längsrichtung der Spule gesehen, die obere Fläche 18 und die untere Fläche 20 des Magneten zumindest bereichsweise, vorzugsweise vollständig, bedeckt. Der ferromagnetische Mantel 14 ist in dem gezeigten Ausführungsbeispiel und in allen weiteren gezeigten Ausführungsbeispielen der Erfindung bevorzugt so ausgebildet, daß die seitlichen Stirnflächen 62a, 62b des Mantels 14 plan (d.h. ohne Versatz) in die seitlichen Stirnflächen 64 des Magneten 4 übergehen. In dem gezeigten Ausführungsbeispiel ist die Spule 6 inklusive des Kerns 10 mit Hilfe von Spiralfedern 22a und 22b in dem Gehäuse 24 des Aktuators 2 federnd gelagert, wohingegen der in den Mantel 14 eingebettete Magnet 4 in dem Gehäuse 24 statisch gelagert ist.

Die kragenartigen Vorsprünge 12a und 12b sind bei dem in Fig. 1 gezeigten Ausführungsbeispiel derart ausgebildet, daß zwischen den seitlichen Stirnflächen 60a, 60b dieser und den gegenüberliegenden seitlichen Stirnflächen 62a, 62b des ferromagnetischen Mantels 14 ein schmaler Luftspalt mit einer Breite von bevorzugt ca. 0,2 mm bis 5 mm verbleibt. Aufgrund dieses schmalen Luftspalts kommt es nur zu geringen Magnetfeldverlusten, wenn der Magnetfluß von einem kragenartigen Vorsprung 12a, 12b in den ferromagnetischen Mantel fließt bzw. umgekehrt.
Die Spule 6 ist bevorzugt derart auf den Kern 10 aufgewickelt, daß zwischen der Spule 6 und dem Magneten 4 ein Luftspalt verbleibt, der in etwa die gleiche Breite aufweist, wie der Luftspalt zwischen den genannten Stirnflächen 60a, 60b und 62a, 62b.
Auch bei allen anderen Ausführungsbeispielen der Erfindung werden die kragenartigen Vorsprünge 12a, 12b so ausgebildet, daß zwischen ihren seitlichen Stirnflächen und den gegenüberliegenden seitlichen Flächen des Mantels 14 nur ein schmaler Luftspalt verbleibt. Ferner wird die Spule 6 wie oben erläutert auf den Kern 10 gewickelt.

Der ferromagnetische Mantel 14 und insbesondere die Teile des ferromagnetischen Mantels 14, die die obere Fläche 18 bzw. die untere Fläche 20 des Magneten 4 bedecken, weisen eine Dicke D auf. Die kragenartigen Vorsprünge 12a, 12b des Kerns weisen bevorzugt eine Dicke d auf, die kleiner oder genauso groß ist, wie die Dicke D des ferromagnetischen Mantels 14.Der Magnet 4 weist in Längsrichtung der Spule (also z-Richtung) ca. eine Länge L = l + d auf, die der Länge I der Spule addiert zu der Dicke d der kragenartigen Vorsprünge 12a, 12b entspricht. Spule 6 und Magnet 4 sind derart zueinander gelagert, daß im statischen Zustand des Aktuators 2 der Magnet 4 in Längsrichtung der Spule 6 gesehen jeweils um die Länge d/2 über das obere bzw. untere Ende der Spule 6 hinausragt. Die genannten Abmessungen gelten auch für die Aktuatoren 2 in allen anderen Ausführungsbeispielen.

Im folgenden wird erläutert, wie sich der Aktuator 2 verhält, wenn durch die Spule 6 ein Wechselstrom getrieben wird. Hierbei wird zunächst davon ausgegangen, daß der Stromfluß durch die Spule 6 so orientiert ist, daß er linksseitig des Kerns 10 in die Papierebene hineinfließt, wohingegen er rechtsseitig des Kerns 10 aus der Papierebene herausfließen soll. In diesem Fall wird durch den Stromfluß in der Spule 6 ein Magnetfeld erzeugt, dessen Magnetfeldlinien innerhalb des Kerns 10 in die negative z-Richtung verlaufen. Der magnetische Fluß wird durch die kragenartigen Vorsprünge 12a, 12b und durch den Mantel 14 geleitet, in dem der Magnet 4 eingebettet ist. Die Magnetfeldlinien weisen den in der Figur 1 eingezeichneten Verlauf auf. Aufgrund des durch die Spule 6 erzeugten Magnetfeldes kommt es in dem Aktuator 2 zu unterschiedlichen Kräften. So entsteht in der Region A eine in die negative z-Richtung gerichtete Kraft, die auf den Kern 10 und auf die Spule 6 wirkt. Diese magnetische Reluktanzkraft entsteht dadurch, daß die Magnetfeldlinie des Magnetfeldes, das durch die stromdurchflossene Spule 6 erzeugt wird, in der Region A das Bestreben aufweisen, den Magneten 4 zu durchdringen bzw. sich über den Magneten 4 zu schließen, da in der Region A die durch den Magneten 4 erzeugten Magnetfeldlinien die gleiche Richtung aufweisen wie die durch die stromdurchflossene Spule 6 erzeugten Magnetfeldlinien.

In der Region B wirkt auf die Spule 6 eine in die negative z-Richtung gerichtete Lorentzkraft, da dort der Vektor des durch die Spule 6 fließenden Stromes in die negative x-Richtung und das durch den Magneten 4 erzeugte Magnetfeld in die positive y-Richtung und somit das Kreuzprodukt dieser beiden Vektoren in die negative z-Richtung weist.

In der Region C wirkt eine in die negative z-Richtung gerichtete Kraft auf die den Kern 10 und die Spule 6, da in dieser Region die durch die Spule 6 erzeugten Magnetfeldlinien eine entgegengesetzte Richtung aufweisen wie die durch den Magneten 4 erzeugten Magnetfeldlinien. Die Magnetfeldlinien versuchen sich in diesem Bereich also einander zu verdrängen, was dadurch erfolgt, daß die Spule 6 nach unten ausweicht.

Alle drei in die negative z-Richtung auf die Spule 6 wirkenden Kräfte addieren sich zu einer in die negative z-Richtung weisenden Gesamtkraft, die dafür sorgt, daß sich die Spule nach unten bewegt: Fließt der Strom in die andere Richtung durch die Spule, so wird auf die Spule dementsprechend eine in die positive z-Richtung orientierte Gesamtkraft ausgeübt und infolgedessen bewegt sich die Spule 6 in die positive z-Richtung, also nach oben. Wird also insgesamt ein Wechselstrom durch die Spule 6 getrieben, so wirkt auf die Spule 6 eine periodische Erzeugerkraft, die das Masse-Feder-System, bestehend aus der Spule 6, dem Kern 10 und den Spiralfedern 22a und 22b zu Schwingungen anregt.

Das schwingende Masse-Feder-System (im Ausführungsbeispiel gemäß Fig. 1 also die Spule 6 mit dem Kern 10) ist gegenüber der statischen Masse (im Ausführungsbeispiel gemäß Fig. 1 also gegenüber dem Magneten 4 mit dem Mantel 14) bevorzugt so gelagert, daß es aus der Ruhelage (s. Fig. 1) maximal um die Strecke d/2 nach oben bzw. nach unten (in z-Richtung gesehen) ausgelenkt werden kann, der gesamte Schwingungsweg von einer maximalen Auslenkung bis zur anderen maximalen Auslenkung also gerade der Dicke d der kragenartigen Vorsprünge 12a, 12b entspricht. Es hat sich gezeigt, daß der Aktuator 2 in diesem Bereich ein lineares Verhalten aufweist und somit einfach zu steuern bzw. zu regeln ist. Die Auslenkung kann beispielsweise durch eine entsprechende Steifigkeit der federnden Lagerung (im Ausführungsbeispiel gemäß der Fig. 1 durch eine entsprechende Steifigkeit der Spiralfedern 22a, 22b) begrenzt werden. Sämtliche Aktuatoren 2 in allen anderen Ausführungsbeispielen werden bevorzugt so gelagert.

Es wird an dieser Stelle ausdrücklich betont, daß die Funktion des in der Figur 1 gezeigten Aktuators 2 nicht davon abhängig ist, ob das Magnetfeld des Magneten 4 in die positive y-Richtung bzw. in die negative y-Richtung orientiert ist. Ist das Magnetfeld des Magneten 4 in die negative y-Richtung orientiert, so kehrt sich lediglich bei einer vorgegebenen Stromflußrichtung durch die Spule die Richtung der auf die Spule 6 wirkenden Kräfte um. Es wird an dieser Stelle femer ausdrücklich darauf hingewiesen, daß die Funktion des in der Figur 1 gezeigten Aktuators 2 nicht davon abhängt, ob die Spule 6 oder der Magnet 4 federnd gelagert ist. Ist anstelle der Spule 6 der Magnet 4 federnd gelagert, so bewegt sich der federnd gelagerte Magnet 4 nach oben, wenn sich bei entsprechender Stromrichtung die federnd gelagerte Spule 6 nach unten bewegen würde und umgekehrt. Eine derartige kinematische Umkehr ist auch bei allen anderen gezeigten Ausführungsbeispielen denkbar.

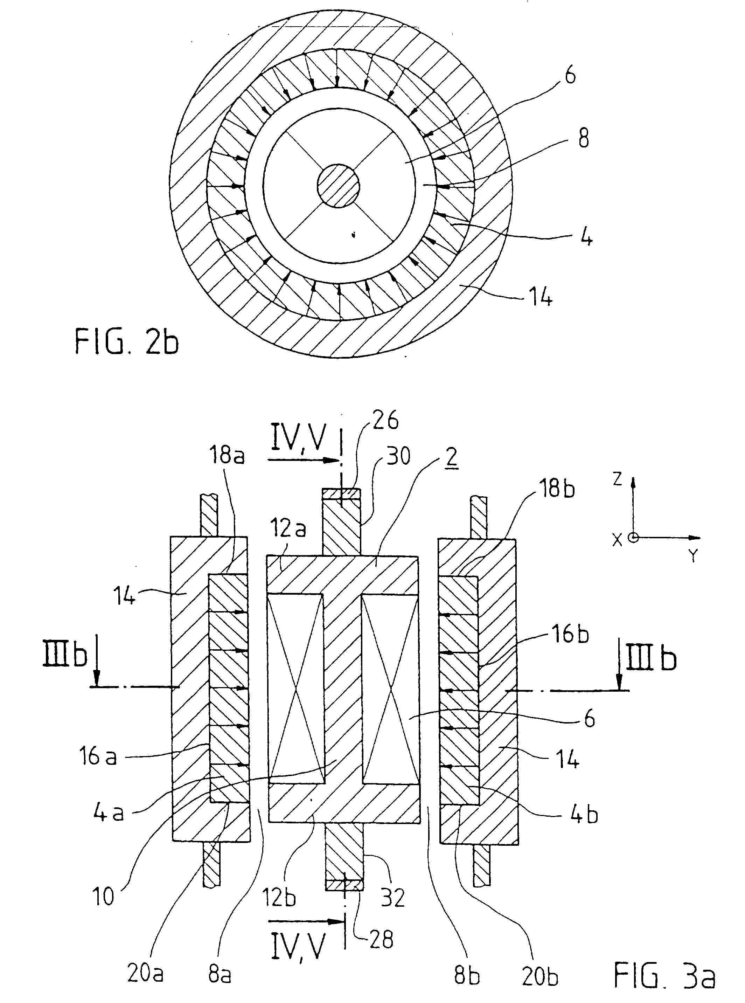

Figur 2 zeigt einen Aktuator 2, wobei die Figur 2a einen Längsschnitt des Aktuators 2 und die Figur 2b einen Querschnitt entlang der in der Figur 2a gezeigten Linie zeigt. Der Aktuator 2 gemäß der Figur 2 weist einen ringförmigen Magneten 4 auf, dessen Magnetisierung in die radial innere Richtung weist. Die Längsachse der elektrisch leitfähigen Spule 6 ist senkrecht zu der radialen Richtung der Magnetisierung des Magneten 4 angeordnet, d.h. sie ist in z-Richtung orientiert. Die Spule 6 wird von dem ringförmigen Magneten 4 konzentrisch derart umschlossen, daß zwischen der Spule 6 und dem ringförmigen Magneten 4 ein Luftspalt 8 verbleibt. Im übrigen weist der in der Figur 2 gezeigte Aktuator 2 einen analogen Aufbau auf, wie der in der Figur 1 gezeigte Aktuator 2, d.h. die Spule 6 ist auf einen Kern 10 mit kragenartigen Vorsprüngen 12a und 12b gewickelt und der ringförmige Magnet 4 ist in einen Mantel 14 eingebettet, der die der Spule abgewandte Fläche 16 des Magneten und, in Längsrichtung der Spule gesehen, die obere Fläche 18 und die untere Fläche 20 des Magneten bedeckt.
Der Kern 10 mit seinen kragenartigen Vorsprüngen 12a, 12b weist in dem gezeigten Ausführungsbeispiel die Form einer Hantel bzw. einer Kabeltrommel auf, auf die die Spule 6 gewickelt ist.

Das Funktionsprinzip des in der Figur 2 gezeigten Aktuators 2 ist identisch mit dem Funktionsprinzip des in der Figur 1 gezeigten Aktuators 2, so daß an dieser Stelle nicht nochmals darauf eingegangen werden soll. Bei dem in der Figur 2 gezeigten Aktuator 2 ist genau wie bei dem in der Figur 1 gezeigten Aktuator 2 die auf den Kern 10 gewickelte Spule 6 mit Hilfe von Blattfedern 26 und 28 federnd gelagert, wobei die Blattfeder 26, in Längsrichtung der Spule 6 gesehen, oberhalb des Kerns 10 und die Blattfeder 28, in Längsrichtung der Spule 6 gesehen, unterhalb des Kerns 10 angeordnet ist. Jeweils ein Ende der Blattfedern 26 bzw. 28 steht über einen Abstandshalter 30 bzw. 32 mit dem kragenartigen Vorsprung 12a bzw. 12b des Kerns 10 in mechanischer Verbindung. Hierbei sind die Abstandhalter 30 bzw. 32 bevorzugt so angeordnet, daß ihre zentralen Längsachsen mit der verlängerten Längsachse der Spule zusammenfallen, so wie es auch in der Figur 2 gezeigt ist (das gleiche gilt ebenfalls für die in den folgenden Ausführungsbeispielen gezeigten Abstandhalter, die mit den kragenartigen Vorsprüngen des Kerns in mechanischer Verbindung stehen). Das jeweils andere Ende der Blattfeder 26 bzw. der Blattfeder 28 ist in dem Gehäuse 24, an dem auch der ringförmige Magnet 4 befestigt ist, eingespannt.

Auch für die Funktion des in der Figur 2 gezeigten Aktuators 2 ist es unwesentlich, ob das durch den ringförmigen Magneten 4 erzeugte Magnetfeld in die radial innere Richtung (also auf die Spule) weist oder aber in die radial äußere Richtung (also von der Spule weg) weist.

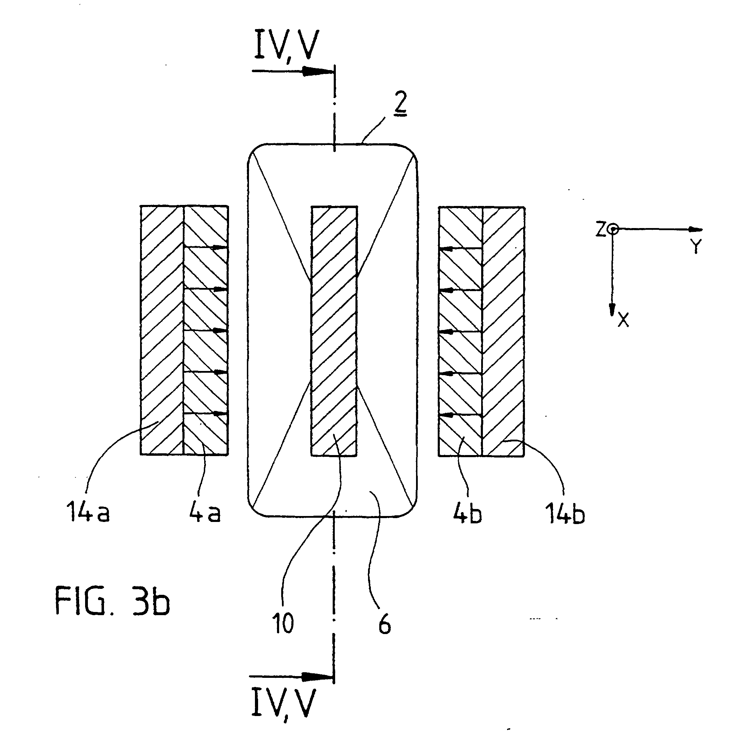

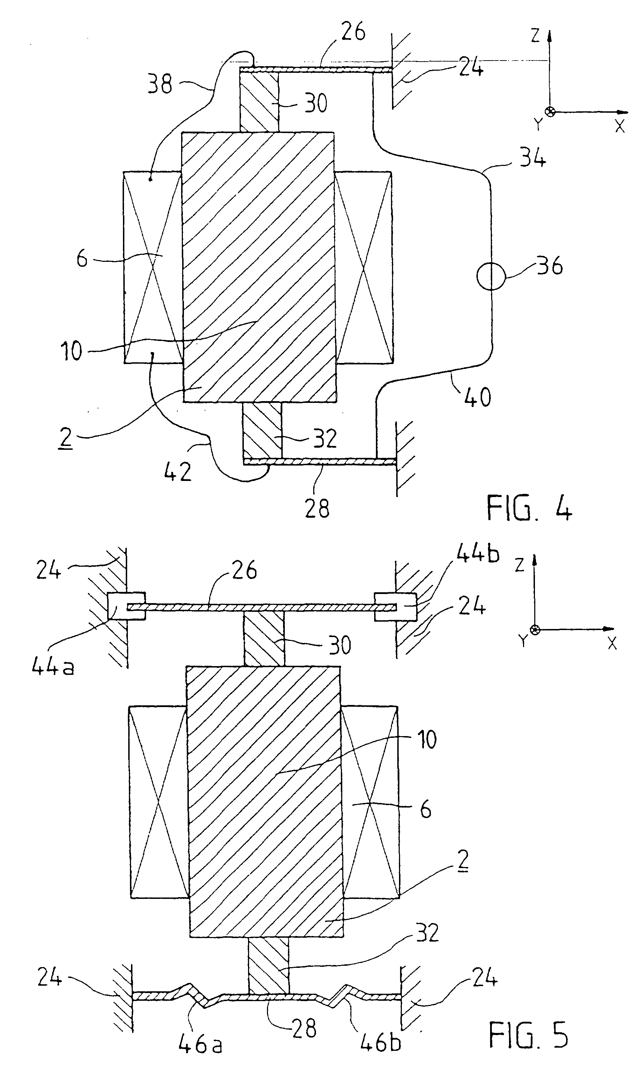

Figur 3 a und 3b zeigt einen Aktuator 2 mit zwei voneinander beabstandeten weitgehend quaderförmigen Magneten 4a und 4b mit Stirnflächen, deren Flächennormalen in die positive bzw. in die negative y-Richtung weisen. Die Magnetisierung des Magneten 4a weist in die positive y-Richtung, wohingegen die Magnetisierung des Magneten 4b in die negative y-Richtung weist. Zwischen den beiden quaderförmigen Magneten 4a und 4b ist mittig eine elektrisch leitfähige Spule angeordnet, deren Längsachse in z-Richtung orientiert ist. Zwischen den Magneten 4a und 4b und der Spule 6 verbleibt jeweils ein Luftspalt 8a bzw. 8b gleicher Breite. Die Spule 6 ist um einen doppel-T-förmigen Kern 10 gewickelt, der, in Längsrichtung der Spule 6 (also in z-Richtung) gesehen, oberhalb und unterhalb der Spule in kragenartigen Vorsprüngen 12a und 12b endet. Jeder der Magnete 4a und 4b ist auch bei dem in der Figur 3a und 3b gezeigten Aktuator 2 in einen ferromagnetischen Mantel 14 hoher Permeabilität eingebettet, der jeweils die der Spule 6 abgewandte Fläche 16a bzw. 16b und, in Längsrichtung der Spule 6 gesehen, die obere Fläche 18 und die untere Fläche 20 des Magneten bedeckt.

Bei dem in der Figur 3a und 3b gezeigten Aktuator ist die um den Kern 10 gewickelte Spule 6 mit Hilfe von Blattfedern 26 und 28 federnd gelagert, wohingegen die ummantelten Magnete 4a und 4b statisch gelagert sind. Die Blattfedern 26 und 28 sind jeweils, in Längsrichtung der Spule gesehen, oberhalb bzw. unterhalb des Kerns 10 angeordnet und stehen über Abstandshalter 30 und 32 mit dem Kern 10 in mechanischer Verbindung.

Figur 4, die einen Längsschnitt durch den in der Figur 3a gezeigten Aktuator 2 entlang der Linie IV/IV zeigt, ist ein Ausführungsbeispiel zu entnehmen, wie die Blattfedern 26 und 28 an dem Aktuator 2 bzw. an dem Gehäuse 24 des Aktuators 2 befestigt sein können. Ein Ende der Blattfeder 26 bzw. der Blattfeder 28 ist an dem Abstandshalter 30 bzw. 32 befestigt, der mit dem Kern 10, um den die Spule 6 gewickelt ist, in mechanischer Verbindung steht. Das andere Ende der Blattfeder 26 bzw. der Blattfeder 28 ist in dem Gehäuse 24 fest eingespannt. Hierbei werden die Blattfedern 26 und 28 vorzugsweise so ausgerichtet, daß ihre Längsachse entlang der x-Richtung verläuft. Der Sinn einer derartigen Ausrichtung der Blattfedern 26 und 28 wird verständlich, wenn man sich die Figur 3a betrachtet. Wird nämlich durch die Spule 6 ein Wechselstrom getrieben, so beginnt die Spule 6 in z-Richtung zu schwingen. Hierbei werden die Blattfedern 26 und 28 entsprechend gekrümmt, so daß sich die um den Kern 10 gewickelte Spule 6 bei einem Schwingungsvorgang auf einem schwach gekrümmten Kreisausschnitt bewegt. Da dieser Kreisausschnitt jedoch ausschließlich in der x-z-Ebene liegt, ist durch die Orientierung der Längsrichtung der Blattfedern 26 und 28 in x-Richtung sichergestellt, daß sich die um den Kern 10 gewickelte Spule 6 bei einem Schwingungsvorgang weder an den Magneten 4a noch an den Magneten 4b annähert (dies wäre offensichtlich der Fall, wenn die Längsrichtung der Blattfedern 26 bzw. 28 in y-Richtung orientiert wäre). Durch die bevorzugte Orientierung der Längsrichtung der Blattfedern 26 und 28 in x-Richtung kann also sichergestellt werden, daß bei einem Schwingungsvorgang der Spule die Luftspalte 8a und 8b immer die gleiche Breite aufweisen und somit nicht die Gefahr besteht, daß die Spule 6 mit dem Magneten 4a bzw. 4b in Berührung kommt.

Der Figur 4 ist über die obigen Ausführungen hinaus eine besonders vorteilhafte Stromzuführung zu der elektrisch leitfähigen Spule 6 zu entnehmen. Dazu führt eine Leitung 34 von der Spannungsquelle 36 zu dem Gehäuse 24 zugewandten Ende der Blattfeder 26. Eine weitere Leitung 38 führt von dem anderen Ende der Blattfeder 26, das mit dem Abstandhalter 30 in Wirkverbindung steht, zu der elektrisch leitfähigen Spule 6. Entsprechend führen Leitungen 40 und 42 von der Spannungsquelle 36 über die Blattfeder 28 zu der elektrisch leitfähigen Spule 6, so daß der Stromkreis durch die Spule geschlossen wird. Beginnt die um den Kern 10 gewickelte Spule 6 infolge eines Stromflusses durch die Spule 6 in z-Richtung zu schwingen, so werden die Endpunkte der Leitungen 34 und 40, die auf den Blattfedern 26 bzw. 28 enden, dynamisch nur in zu vernachläßigender Art und Weise belastet, da die Bereiche der Blattfedern 26 bzw. 28, in denen die Leitungen 34 und 40 enden, bei einer Schwingung der Spule 6 praktisch nicht verformt werden. Darüber hinaus werden auch die Leitungen 38 und 42, die von den Blattfedern 26 und 28 zu der Spule 6 führen, dynamisch nicht belastet, da die beiden Endpunkte der Leitungen bei einer Schwingung der Spule in z-Richtung immer den gleichen Abstand zueinander einnehmen. Die im Zusammenhang mit der Figur 4 erläuterte Stromzuführung zu der elektrisch leitfähigen Spule 6 kann überall dort verwendet werden, wo die schwingend gelagerte Spule 6 über Blattfedern 26, 28 mit einem Gehäuse verbunden ist und funktioniert selbstverständlich nur dann, wenn die Blattfedern 26 und 28 elektrisch leitfähig und gegenüber dem Gehäuse 24 und dem Abstandhalter 30 und 32 elektrisch isoliert sind. Selbstverständlich ist eine Stromzuführung auch über alle anderen in den Ausführungsbeispielen gezeigten Federn möglich, sofern sie elektrisch leitfähig sind.

Figur 5 zeigt ein alternatives Ausführungsbeispiel der Lagerung der um den Kern 10 gewickelten Spule 6 des in der Figur 3 gezeigten Aktuators 2. In Längsrichtung der Spule 6 gesehen, ist wiederum oberhalb und unterhalb des Kerns 10 jeweils eine Blattfeder 26 und 28 angeordnet. Die Blattfedern 26 und 28 stehen bei diesem Ausführungsbeispiel jedoch in ihrem mittleren Bereich mit dem am Kern 10 befestigten Abstandhalter 30 bzw. 32 in mechanischer Verbindung und sind an ihren Enden jeweils in das Gehäuse 24 des Aktuators 2 eingespannt. Der zwischen den Enden der Blattfeder 26 bzw. 28 und dem Abstandhalter 30 bzw. 32 befindliche Teil der Blattfeder 26 bzw. 28 ist so ausgebildet, daß er sich in Längsrichtung der Blattfeder (also in x-Richtung) dehnen kann. Dies wird bei der Blattfeder 26 dadurch erreicht, daß die Blattfeder 26 an beiden Enden in dem Gehäuse 24 über ein Loslager 44a bzw. 44b eingespannt ist. Bei dem Loslager 44 kann es sich beispielsweise um ein elastisches, dehnbares Gummilager handeln. Bei der Blattfeder 28 wird dies dadurch erreicht, daß diese in den genannten Bereichen eine Faltung 46a bzw. 46b aufweist, die eine Dehnung der Blattfeder 28 in x-Richtung ermöglicht, wenn auch auf die Blattfeder 28 entsprechende Kräfte wirken.

Der Vorteil der in der Figur 5 gezeigten Lagerung der um den Kern 10 gewickelten Spule 6 ist darin zu sehen, daß bei einer Schwingung der Spule 6 in z-Richtung kein resultierendes Drehmoment erzeugt wird.

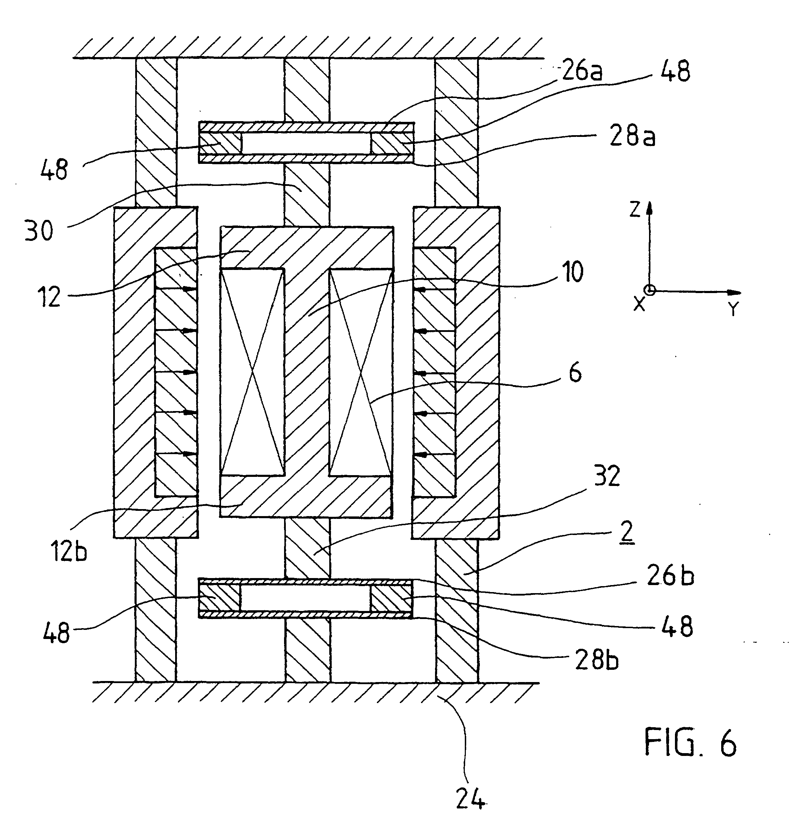

Figur 6 zeigt einen Aktuator 2, der weitgehend genauso aufgebaut ist wie der in der Figur 2 gezeigte Aktuator 2 mit einem ringförmigen Magneten 4 bzw. weitgehend genauso aufgebaut ist wie der in der Figur 3 gezeigte Aktuator 2 mit zwei quaderförmigen Magneten 4a und 4b. Der in der Figur 6 gezeigte Aktuator 2 unterscheidet sich lediglich durch die gefederte Lagerung der um den Kern 10 gewickelten Spule 6. Im Zentrum der kragenartigen Vorsprünge 12a und 12b befinden sich Abstandhalter 30 und 32, deren anderes Ende jeweils mit dem Gehäuse 24 des Aktuators 2 in mechanischer Verbindung steht. Jeder der beiden Abstandhalter 30 und 32 ist durch ein Blattfedersystem aus zwei übereinanderliegenden Blattfedern 26a, 28a bzw. 26b, 28b unterbrochen. Die beiden Blattfedern 26 und 28 sind an ihren Enden jeweils durch Abstandhalter 48 voneinander beabstandet und über diese miteinander verbunden. Ferner ist die obere Blattfeder 26 in ihrem mittleren Bereich mit dem dem Gehäuse 24 zugewandten Teil des jeweiligen Abstandhalters verbunden, wohingegen die untere Blattfeder 28 in ihrem mittleren Bereich mit dem dem Kern 10 zugewandten Teil des jeweiligen Abstandhalters verbunden ist. Die Blattfedern 26 und 28 sind derart orientiert, daß die Längsrichtung der Blattfedern senkrecht zur Längsrichtung der Spule 6 bzw. senkrecht zur Schwingungsrichtung der Spule 6 verlaufen.

Wird durch die Spule 6 ein Wechselstrom getrieben und daraufhin die Spule 6 zu Schwingungen angeregt, so wirken die in den Abstandhaltern 30 und 32 integrierten Blattfedern 26 und 28 ähnlich wie Spiralfedern, weisen jedoch den Vorteil auf, daß sie eine Verschiebung der um den Kern 10 gewickelten Spule 6 senkrecht zur Schwingungsrichtung nicht zulassen, so daß die Breite des Luftspaltes 8 (s. auch Fig. 2) bzw. der Luftspalte 8a, 8b (s. auch Fig. 3) konstant bleibt. Darüber hinaus weist die in der Figur 6 gezeigte federnde Lagerung der um den Kem 10 gewickelten Spule 6 den Vorteil auf, daß bei einer Schwingung der Spule 6 in z-Richtung keine Drehmomente auftreten.

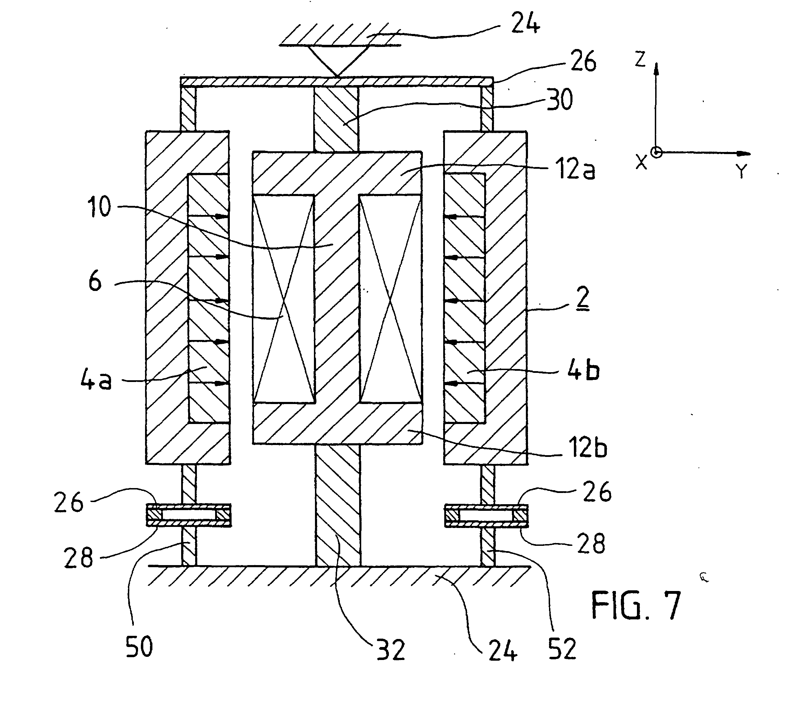

Figur 7 zeigt ebenfalls einen Aktuator 2, der an sich genauso aufgebaut ist wie der in der Figur 2 gezeigte Aktuator 2 mit einem ringförmigen Magneten 4 bzw. genauso aufgebaut ist wie der in der Figur 3 gezeigte Aktuator 2 mit zwei quaderförmigen Magneten 4a und 4b. Der Unterschied bei dem in der Figur 7 gezeigten Ausführungsbeispiel ist darin zu sehen, daß die Spule 6 inklusive des Kerns 10 statisch gelagert ist und der eingebettete Magnet 4 bzw. die eingebetteten Magnete 4a und 4b derart federnd gelagert sind, daß sie Schwingungen in z-Richtung vollführen können, wenn durch die Spule 6 ein Wechselstrom getrieben wird. Die federnde Lagerung der Magnete 4a und 4b kann mit Hilfe von Blattfedern erfolgen, von denen jeweils eine in Längsrichtung der Spule 6 gesehen oberhalb und unterhalb des Kerns 10 angeordnet ist. Jede der Blattfeder steht in diesem Fall in ihrem mittleren Bereich über einen Abstandhalter 30 mit dem Kern 10 und an ihren Enden jeweils über Abstandhalter mit den ummantelten Magneten 4a bzw. 4b in mechanischer Verbindung, so wie es auch für die Blattfeder 26 in der Figur 7 gezeigt ist.

Alternativ kann die um den Kern 10 gewickelte Spule über einen Abstandhalter 32 direkt mit dem Gehäuse 24 in mechanischer Verbindung stehen. In diesem Fall kann jeder der eingebetteten Magnete 4a und 4b sowohl oberhalb als auch unterhalb des Kerns 10 mit Hilfe von Abstandhaltern 50 und 52 schwingend gelagert werden, die jeweils durch übereinanderliegende Blattfedern 26 und 28 unterbrochen sind. Die Abstandhalter 50 und 52 weisen den gleichen Aufbau wie der im Zusammenhang mit der Figur 6 erläuterte Abstandhalter 30 auf, so daß an dieser Stelle nicht noch einmal näher auf den Aufbau der Abstandhalter 50 und 52 eingegangen werden soll.

Bei allen Ausführungsbeispielen, die in den Figuren 1 bis 7 gezeigt sind, können der Magnet 4 bzw. die Magnete 4a und 4b als Permanentmagnete mit einer entsprechenden Magnetisierungsrichtung bzw. als Elektromagnete ausgebildet sein, in denen sich eine entsprechende Magnetisierungsrichtung einstellt, wenn sie von einem Strom durchflossen werden. Werden in den Aktuatoren Permanentmagnete verwendet, so werden diese bevorzugt als Seltenerdmagnete ausgebildet.

Darüber hinaus können in allen in den Figuren gezeigten Ausführungsbeispielen der ferromagnetische Kern 10 und die ferromagnetischen Mäntel 14 aus ferromagnetischen Blechen mit hoher Permeabilität, bevorzugt aus Elektroblech oder Eisen, bestehen, die durch Isolierschichten voneinander getrennt sind. Hierbei werden die Bleche derart aufeinander gestapelt, daß sie besonders gut von dem Magnetfluß, der durch die elektrisch leitfähige Spule 6 erzeugt wird, durchflossen werden können und Wirbelströme sich nur in der "Dicke" der Bleche ausbilden können. Dies wird beispielhaft an dem in der Figur 3 gezeigten Aktuator 2 erläutert: Der Kern 10, der in kragenartigen Vorsprüngen 12a und 12b endet, besteht aus Elektroblechen oder Eisenblechen, von denen eins in der Figur 3a gezeigt ist. Auf diesem Blech liegt eine Isolierschicht, an die sich dann ein weiteres Blech anschließt. Dieser Aufbau des Kerns 10 wird in x-Richtung fortgesetzt, so daß schließlich der in der Figur 3 gezeigte Kern 10 entsteht.

Auch der Mantel 14 wird aus "c-förmigen" Elektroblechen/Eisenblechen gebildet, von denen jeweils eins in der Figur 3a gezeigt ist. Auf den in der Figur 3a gezeigten Blechen liegt eine Isolierschicht, die die in der Figur 3a gezeigten Bleche von den nächsten sich anschließenden Eisenblechen trennt. Der beschriebene Aufbau wird in x-Richtung fortgesetzt, so daß schließlich der gesamte Mantel 14 für die Magnete 4a und 4b entsteht.

Figur 8a zeigt einen Aktuator 2, der an sich genauso aufgebaut ist wie der in der Figur 2a gezeigte Aktuator, so daß bezüglich des Aufbaues auf die dazugehörige Figurenbeschreibung verwiesen wird. Ein Unterschied ist lediglich darin zu sehen, daß bei dem in der Figur 8a gezeigten Aktuator 2 sowohl der Kern 10 als auch der Mantel 14 aus einzelnen nebeneinanderliegenden Elektrobleche oder Eisenblechen 54a bzw. 54b besteht, die jeweils durch eine isolierende Lackschicht 56 voneinander getrennt sind. Die Bleche 54a weisen einen kreissegmentförmigen Querschnitt und die Bleche 54b einen ringsegmentförmigen Querschnitt auf. Die kreissegmentförmigen Bleche 54a und die ringsegmentförmigen Bleche 54b sind derart angeordnet, daß die isolierenden Lackschichten auf den Außenflächen der genannten Elemente bei zwei einander zugeordneten Elementen auf dem gleichen Radius liegen.

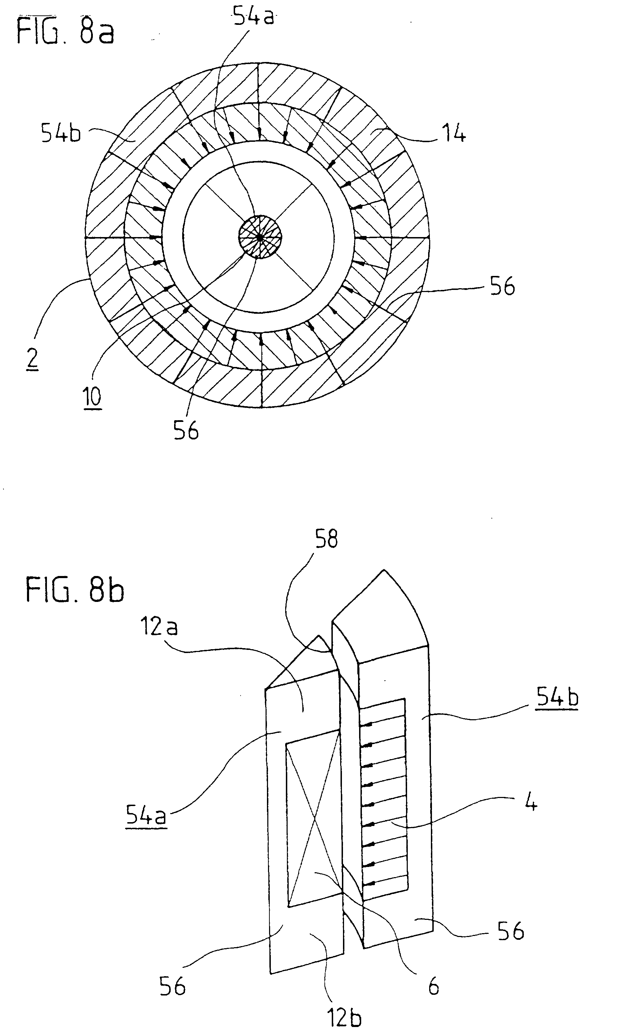

Figur 8b zeigt in perspektivischer Ansicht ein kreissegmentförmiges Blech 54a mit einem dazugehörigen ringsegmentförmigen Blech 54b. Das kreissegmentförmige Blech 54a des Kerns 10 weist in der Seitenansicht die Form eines "c" auf, das die Spule 6 umfaßt. Das ringsegmentförmige Blech 54b weist in der Seitenansicht ebenfalls die Form eines "c" auf, das den Magneten 4 umfaßt. Die "c"-förmigen Seitenflächen sowohl des Bleches 54a als auch des Bleches 54b sind mit einer elektrisch isolierenden Lackschicht bedeckt. Die Bogenlänge 58 des kreissegmentförmigen Bleches 54a wird möglichst kurz ausgebildet. In diesem Fall sind die sich in dem Blech 54a bildenden Wirbelströme zu vernachläßigen. Das gleiche gilt dementsprechend für die innere und die äußere Bogenlänge des ringsegmentförmigen Bleches 54b.

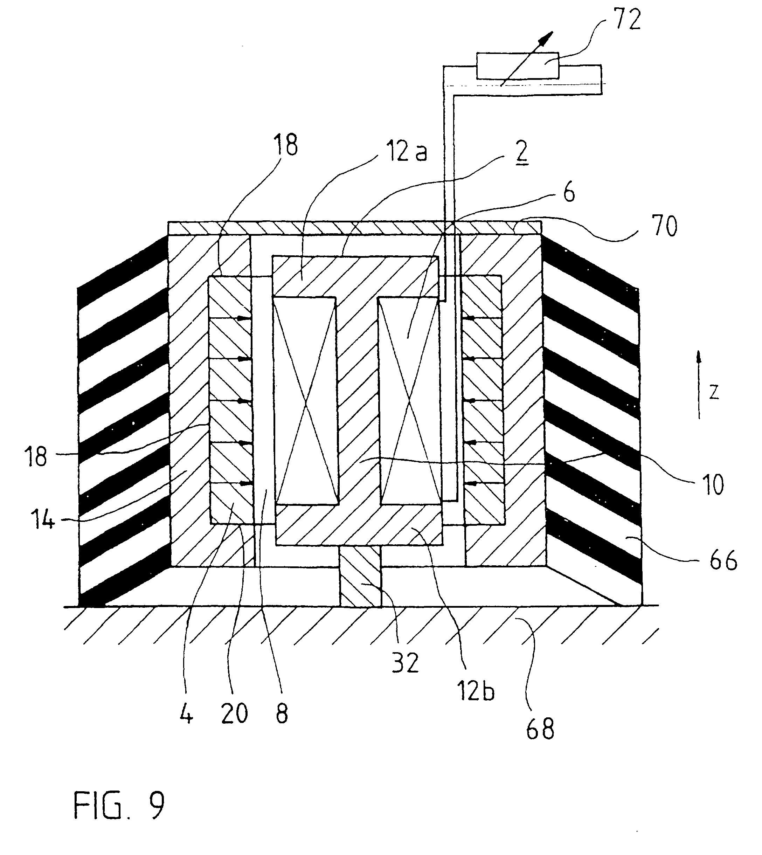

Figur 9 zeigt im Längsschnitt einen Aktuator 2, der weitestgehend genauso aufgebaut ist, wie der in Figur 2 gezeigte Aktuator, so daß diesbezüglich auf die Figurenbeschreibung zu dieser Figur verwiesen wird. Der eingebettete ringförmige Magnet 4 des Aktuators 2 ist mit Hilfe eines Federelementes in Form eines ringförmigen Elastomerlagers 66 gegenüber einer Tragplatte 68 federnd gelagert. Das Elastomerlager 66 umfaßt dabei radial außen den Mantel 14 und ist so ausgebildet, daß zwischen der Unterseite des Mantels 14 und der Tragplatte 68 ein Spalt verbleibt. Die um den Kern 10 gewickelte Spule 6 ist mit Hilfe eines Abstandhalters 32 statisch an der Tragplatte 68 befestigt. An der Oberseite des Mantels 14 ist eine Tragplatte 70 befestigt, wobei sich gegebenenfalls zwischen dem Mantel 14 und der Tragplatte Abstandhalter befinden können, um den Abstand zwischen der Tragplatte und dem Kern 10 und damit den "Schwingungsweg" in z-Richtung zu vergrößern. Die Steifigkeit des Elastomerlagers 66 ist so gewählt, daß der Aktuator die in der Figur 9 gezeigte Position einnimmt, in der der Magnet 4 in Längsrichtung der Spule 6 gesehen um die gleiche Strecke über das obere und untere Ende der Tragplatte hinausragt, wenn die Tragplatte mit einer bekannten (nicht gezeigten) Last, z.B. einem Motor, statisch beaufschlagt wird.

Die Spulenenden der Spule 6 sind über einen regelbaren elektrischen Verbraucher in Form eines regelbaren elektrischen Widerstandes 72 oder einer regelbaren elektrischen Quelle kurzgeschlossen. Wird die sich an Tragplatte 70 abstützende Last durch äußere Kräfte in Schwingungen entlang der z-Richtung versetzt, so übertragen sich diese Schwingungen auf den Aktuator 2 und der federnd gelagerte ummantelte Magnet 4 beginnt in Längsrichtung der Spule zu schwingen. Dadurch verändert sich das von der Spule 6 umfaßte Magnetfeld zeitlich ständig, so daß in der Spule 6 eine Spannung induziert wird und dort infolgedessen ein Strom fließt. Die elektrische Energie des Stromflusses wird in dem Widerstand 72 in Wärme umgewandelt. Aufgrund dieser Energieumwandlung wird die Schwingung der Last gedämpft. Die Dämpfung ist um so größer, je größer der elektrische Widerstand 72 ist.

### Bezugszeichenliste

- 2: Aktuator
- 4: Magnet
- 6: Spule
- 8: Luftspalt
- 10: Kern
- 12a, b: kragenartige Vorsprünge
- 14: Mantel
- 16: Fläche des Magneten, die der Spule abgewandt ist
- 18: obere Fläche des Magneten
- 20: untere Fläche des Magneten
- 22a, b: Spiralfedem
- 24: Gehäuse
- 26, 28: Blattfedern
- 30, 32: Abstandhalter
- 34: Leitung
- 36: Spannungsquelle
- 38, 40, 42: Leitung
- 44: Loslager
- 46: Faltung
- 48, 50, 52: Abstandhalter
- 54a, b: Eisenblech
- 56: Lackschichten
- 58: Bogenlänge
- 60a, b: seitliche Stirnflächen der kragenartigen Vorsprünge
- 62a, b: seitliche Stirnflächen des ferromagnetischen Mantels
- 64: seitliche Stirnfläche des Magneten
- 66: Elastomerlager
- 68, 70: Tragplatte
- 72: regelbarer elektrischer Widerstand

## Patentansprüche

1. Aktuator (2), der folgende Bestandteile enthält:
- mindestens einen Magneten (4a, 4b) mit einer vorgegebenen Magnetisierungsrichtung
- eine elektrisch leitfähige Spule (6), deren Längsachse weitgehend senkrecht zur Magnetisierungsrichtung des Magneten (4a, 4b) orientiert ist und durch die ein elektrischer Strom treibbar ist, wobei die Spule (6) derartig zu dem Magneten (4a, 4b) angeordnet ist, dass zwischen der Spule (6) und dem Magneten (4a, 4b) ein Luftspalt (8) verbleibt und dass im statischen Zustand des Aktuators (2) der Magnet (4a, 4b), in Längsrichtung der Spule (6) gesehen, über die Enden der Spule (6) hinausragt
- einen ferromagnetischen Kern (10) hoher Permeabilität, um den die Spule (6) gewickelt ist und der in Längsrichtung der Spule (6) gesehen, oberhalb und unterhalb der Spule (6) in kragenartigen Vorsprüngen (12a, 12b) aus ferromagnetischem Material hoher Permeabilität endet, wobei
- entweder der Magnet (4a, 4b) statisch gelagert ist und die Spule (6) inklusive des Kerns (10) derart federnd gelagert ist, dass die Spule (6) inklusive des Kerns (10) Schwingungen vollführen kann, wenn durch die Spule (6) ein Wechselstrom getrieben wird
- oder die Spule (6) inklusive des Kerns (10) statisch gelagert ist und der Magnet (4a, 4b) derart federnd gelagert ist, dass er Schwingungen vollführen kann, wenn durch die Spule (6) ein Wechselstrom getrieben wird,
**dadurch gekennzeichnet, dass**
- der Magnet (4a, 4b) in einen ferromagnetischen Mantel (14) hoher Permeabilität eingebettet ist, so dass der Aktuator ausschließlich einen Luftspalt zwischen der Spule (6) und dem Magneten (4a, 4b) aufweist, wobei der Mantel (14) zumindest die der Spule (6) abgewandte Fläche (16) des Magneten (4a, 4b) und, in Längsrichtung der Spule (6) gesehen, die obere (18) und die untere Fläche (20) des Magneten (4a, 4b) vollständig bedeckt.

2. Aktuator (2) nach Anspruch 1, **dadurch gekennzeichnet, daß** er folgende Bestandteile enthält:
- einen ringförmigen Magneten (4) mit einer Magnetisierung in radialer Richtung
- eine elektrisch leitfähige Spule (6), deren Längsachse senkrecht zu der radialen Richtung der Magnetisierung angeordnet ist und die von dem ringförmigen Magneten (4) konzentrisch derart umschlossen wird, daß zwischen dem Magneten (4) und der Spule (6) ein Luftspalt (8) verbleibt.

3. Aktuator (2) nach Anspruch 1, **dadurch gekennzeichnet, daß** er folgende Bestandteile enthält:
- zwei voneinander beabstandete weitgehend quaderförmige Magnete (4a, 4b) mit Stirnflächen, deren Flächennormalen in die positive bzw. in die negative y-Richtung weisen, wobei die Magnetisierung des einen Magneten (4a) in die positive y-Richtung und die Magnetisierung des anderen Magneten (4b) in die negative y-Richtung weist und wobei jeder Magnet (4a, 4b) in einen ferromagnetischen Mantel (14) hoher Permeabilität eingebettet ist, der die der Spule abgewandte Stirnfläche (16) des Magneten (4a, 4b) und die Flächen (18, 20) des Magneten (4a, 4b), deren Flächennormalen in die positive bzw. in die negative z-Richtung weisen, zumindest bereichsweise bedeckt, und
- eine elektrisch leitfähige Spule (6), deren Längsachse in z-Richtung orientiert ist und durch die ein elektrischer Strom treibbar ist, wobei die Spule (6) derartig zwischen den Magneten (4a, 4b) angeordnet ist, daß zwischen der Spule (6) und jedem der Magnete (4a, 4b) ein Luftspalt (8a, 8b) verbleibt.

4. Aktuator (2) nach einem der Ansprüche 1 bis 3, **dadurch gekennzeichnet, daß** die Spule (6) durch einen regelbaren elektrischen Verbraucher (72), insbesondere durch einen regelbaren elektrischen Widerstand (72) kurzgeschlossen ist.

5. Aktuator (2) nach Anspruch 4, **dadurch gekennzeichnet, daß**
- entweder der bzw. die eingebetteten Magneten (4a, 4b) statisch gelagert sind und die Spule (6) inklusive des Kerns (10) mittels eines Elastomerlagers (66) federnd gelagert ist
- oder die Spule (6) inklusive des Kerns (10) statisch gelagert ist und der bzw. die eingebetteten Magneten mittels Elastomerlager (66) federnd gelagert sind.

6. Aktuator (2) nach einem der Ansprüche 1 bis 3, **dadurch gekennzeichnet, daß** der bzw. die Magnete (4a, 4b) statisch gelagert sind und die Spule (6) inklusive des Kerns (10) mit Hilfe von Spiralfedern (22a, 22b), deren Längsachsen in Richtung der Längsachse der Spule (6) verlaufen, federnd gelagert ist.

7. Aktuator (2) nach einem der Ansprüche 1 bis 3, **dadurch gekennzeichnet, daß** der bzw. die Magnete (4a, 4b) statisch gelagert sind und die Spule (6) inklusive des Kerns (10) mit Hilfe von Blattfedern (26, 28) federnd gelagert ist.

8. Aktuator (2) nach Anspruch 7, **dadurch gekennzeichnet, daß**, in Längsrichtung der Spule (6) gesehen, oberhalb und unterhalb des Kerns (10) mindestens eine Blattfeder (26, 28) angeordnet ist, die einerseits mit dem Kern (10) in mechanischer Verbindung steht und andererseits in einem statischen Lager am Gehäuse (24) fest eingespannt ist.

9. Aktuator (2) nach Anspruch 7, **dadurch gekennzeichnet, daß** in Längsrichtung der Spule (6) gesehen, oberhalb und unterhalb des Kerns (10) mindestens eine Blattfeder (26, 28) angeordnet ist, die im mittleren Bereich mit dem Kern (10) in mechanischer Verbindung steht und an ihren Enden eingespannt ist.

10. Aktuator (2) nach Anspruch 9, **dadurch gekennzeichnet, daß** jede Blattfeder (26, 28) an in Enden jeweils in einem Loslager (44a, 44b) eingespannt ist.

11. Aktuator (2) nach Anspruch 9, **dadurch gekennzeichnet, daß** jede Blattfeder (26, 28) an ihren Enden fest eingespannt ist und in ihrer Längsrichtung dehnbar ist.

12. Aktuator (2) nach Anspruch 7, **dadurch gekennzeichnet, daß** in Längsrichtung der Spule (6) gesehen, oberhalb und unterhalb des Kerns (10) jeweils ein Blattfedersystem angeordnet ist, das aus mindestens zwei Blattfedern (26, 28) besteht, die an ihren Enden miteinander in mechanischer Wirkverbindung stehen, wobei die jeweils eine Blattfeder (28) des Blattfedersystems mit dem Kern (10) und die jeweils andere Blattfeder (26) des Blattfedersystems mit einem Gehäuse (24) des Aktuators in mechanischer Wirkverbindung steht.

13. Aktuator (2) nach einem der Ansprüche 8 bis 12, **dadurch gekennzeichnet, daß** sowohl die oberhalb als auch die unterhalb des Kerns (10) angeordnete Blattfeder (26, 28) einerseits mit der Spule (6) und andererseits mit der Spannungsquelle (36), durch die der Strom, der durch die Spule getrieben wird, erzeugt wird, elektrisch leitend verbunden ist.

14. Aktuator (2) nach einem der Ansprüche 1 bis 3, **dadurch gekennzeichnet, daß** die Spule (6) inklusive des Kerns (10) statisch gelagert ist und der eingebettete bzw. die eingebetteten Magnete (4a, 4b) mit Hilfe von Blattfedern (26, 28) federnd gelagert sind.

15. Aktuator (2) nach Anspruch 3, **dadurch gekennzeichnet, daß** in Längsrichtung der Spule (6) gesehen, oberhalb und unterhalb des Kerns (10) mindestens eine Blattfeder (26, 28) angeordnet ist, deren eines Ende mit dem ersten eingebetteten Magnet (4a) in mechanischer Verbindung steht und deren anderes Ende mit dem zweiten eingebetteten Magnet (4b) in mechanischer Verbindung steht und die in ihrem mittleren Bereich fixiert ist.

16. Aktuator (2) nach einem der Ansprüche 1 bis 15, **dadurch gekennzeichnet, daß** der ferromagnetische Kem (10) und die ferromagnetischen Mäntel (14) aus ferromagnetischen Blechen mit hoher Permeabilität bestehen, die durch Isolierschichten voneinander getrennt sind.

17. Aktuator (2) nach Anspruch 15, **dadurch gekennzeichnet, daß** die Bleche aus Elektroblech sind.

18. Aktuator (2) nach einem der Ansprüche 1 bis 16, **dadurch gekennzeichnet, daß** der Magnet (4) bzw. die Magnete (4a, 4b) als Permanentmagnete ausgebildet sind.

19. Aktuator (2) nach Anspruch 18, **dadurch gekennzeichnet, daß** mindestens einer der Permanentmagnete als Seltenerdmagnet ausgebildet ist.

20. Aktuator (2) nach einem der Ansprüche 1 bis 17, **dadurch gekennzeichnet, daß** der Magnet (4) bzw. die Magnete (4a, 4b) als Elektromagnete ausgebildet sind.

21. Aktuator (2) nach einem der Ansprüche 3 bis 20, **dadurch.gekennzeichnet, daß** der Kern (10) als doppel-T-förmiger Kern (10) ausgebildet ist, dessen Längsachse in Längsachse der Spule (6) liegt.

## Claims

1. Actuator (2), which includes the following constituent parts:
- at least one magnet (4a, 4b) having a prescribed direction of magnetisation,
- an electrically conductive coil (6), the longitudinal axis of which is orientated largely perpendicularly relative to the direction of magnetisation of the magnet (4a, 4b), and by means of which coil an electric current is drivable, the coil (6) being disposed relative to the magnet (4a, 4b) in such a manner that an air gap (8) remains between the coil (6) and the magnet (4a, 4b), and in such a manner that the magnet (4a, 4b), when viewed with respect to the longitudinal direction of the coil (6), protrudes beyond the ends of the coil (6) in the static state of the actuator (2), and
- a ferromagnetic core (10) of high permeability, around which the coil (6) is wound, and which, when viewed with respect to the longitudinal direction of the coil (6), terminates above and below the coil (6) in collar-like projection members (12a, 12b), which are formed from ferromagnetic material of high permeability,
- either the magnet (4a, 4b) being statically mounted and the coil (6), including the core (10), being resiliently mounted in such a manner that the coil (6), including the core (10), can accomplish oscillations when an alternating current is driven through the coil (6),
- or the coil (6), including the core (10), being statically mounted and the magnet (4a, 4b) being resiliently mounted in such a manner that the magnet can accomplish oscillations when an alternating current is driven through the coil (6),
**characterised in that**
- the magnet (4a, 4b) is embedded in a ferromagnetic casing (14) of high permeability, so that the actuator exclusively has an air gap between the coil (6) and the magnet (4a, 4b), the casing (14) completely covering at least the face (16) of the magnet (4a, 4b) remote from the coil (6) and, when viewed with respect to the longitudinal direction of the coil (6), the upper face (18) and the lower face (20) of the magnet (4a, 4b).

2. Actuator (2) according to claim 1, **characterised in that** it includes the following constituent parts:
- an annular magnet (4) with a magnetisation in the radial direction, and
- an electrically conductive coil (6), the longitudinal axis of which is disposed perpendicularly relative to the radial direction of the magnetisation, and which coil is concentrically surrounded by the annular magnet (4) in such a manner that an air gap (8) remains between the magnet (4) and the coil (6).

3. Actuator (2) according to claim 1, **characterised in that** it includes the following constituent parts:
- two largely rectangular magnets (4a, 4b), which are spaced apart from each other and have end faces, the face normals of which point in the positive y- direction and respectively in the negative y-direction, the magnetisation of one magnet (4a) pointing in the positive y-direction, and the magnetisation of the other magnet (4b) pointing in the negative y-direction, and each magnet (4a, 4b) being embedded in a ferromagnetic casing (14) of high permeability, which casing covers, at least in various regions, the end face (16) of the magnet (4a, 4b) remote from the coil and the faces (18, 20) of the magnet (4a, 4b), the face normals of which point in the positive z-direction and respectively in the negative z-direction, and
- an electrically conductive coil (6), the longitudinal axis of which is orientated in the z-direction, and through which coil an electric current is drivable, the coil (6) being disposed between the magnets (4a, 4b) in such a manner that an air gap (8a, 8b) remains between the coil (6) and each of the magnets (4a, 4b).

4. Actuator (2) according to one of claims 1 to 3, **characterised in that** the coil (6) is short-circuited by a controllable electrical consuming device (72), more especially by a controllable electrical resistor (72).

5. Actuator (2) according to claim 4, **characterised in that**
- either the embedded magnet or magnets (4a, 4b) respectively is or are statically mounted, and the coil (6), including the core (10), is resiliently mounted by means of an elastomeric bearing (66),
- or the coil (6), including the core (10), is statically mounted, and the embedded magnet or magnets respectively is or are resiliently mounted by means of elastomeric bearings (66).

6. Actuator (2) according to one of claims 1 to 3, **characterised in that** the magnet or magnets (4a, 4b) respectively is or are statically mounted, and the coil (6), including the core (10), is resiliently mounted by means of helical springs (22a, 22b), the longitudinal axes of which extend in the direction of the longitudinal axis of the coil (6).

7. Actuator (2) according to one of claims 1 to 3, **characterised in that** the magnet or magnets (4a, 4b) are statically mounted, and the coil (6), including the core (10), is resiliently mounted by means of leaf springs (26, 28).

8. Actuator (2) according to claim 7, **characterised in that**, when viewed with respect to the longitudinal direction of the coil (6), at least one leaf spring (26, 28) is disposed above and below the core (10), which spring communicates mechanically with the core (10) at one end and is securedly clamped in position in a static bearing on the housing (24) at the other end.

9. Actuator (2) according to claim 7, **characterised in that**, when viewed with respect to the longitudinal direction of the coil (6), at least one leaf spring (26, 28) is disposed above and below the core (10), which spring communicates mechanically with the core (10) in the central region and is clamped in position at its ends.

10. Actuator (2) according to claim 9, **characterised in that** each leaf spring (26, 28) is clamped in position at its ends in a respective alignment bearing (44a, 44b).

11. Actuator (2) according to claim 9, **characterised in that** each leaf spring (26, 28) is securedly clamped in position at its ends and is extendable in respect of its longitudinal direction.

12. Actuator (2) according to claim 7, **characterised in that**, when viewed with respect to the longitudinal direction of the coil (6), a respective leaf spring system is disposed above and below the core (10), which system comprises at least two leaf springs (26, 28), which communicate with each other in a mechanically operative manner at their ends, the one respective leaf spring (28) of the leaf spring system communicating in a mechanically operative manner with the core (10), and the other respective leaf spring (26) of the leaf spring system communicating in a mechanically operative manner with a housing (24) of the actuator.

13. Actuator (2) according to one of claims 8 to 12, **characterised in that** the leaf springs (26, 28), disposed both above and below the core (10), is electrically conductively connected to the coil (6) at one end and to the voltage source (36) at the other end, the current which is driven through the coil being produced by said voltage source.

14. Actuator (2) according to one of claims 1 to 3, **characterised in that** the coil (6), including the core (10), is statically mounted, and the embedded magnet or the embedded magnets (4a, 4b) respectively is or are resiliently mounted by means of leaf springs (26, 28).

15. Actuator (2) according to claim 3, **characterised in that**, when viewed with respect to the longitudinal direction of the coil (6), at least one leaf spring (26, 28) is disposed above and below the core (10), one end of said spring communicating mechanically with the first embedded magnet (4a), and the other end of said spring communicating mechanically with the second embedded magnet (4b), and said spring being secured in its central region.

16. Actuator (2) according to one of claims 1 to 15, **characterised in that** the ferromagnetic core (10) and the ferromagnetic casings (14) are formed from ferromagnetic sheets with a high permeability, which sheets are separated from one another by insulating layers.

17. Actuator (2) according to claim 15, **characterised in that** the sheets are formed from electric sheeting.

18. Actuator (2) according to one of claims 1 to 16, **characterised in that** the magnet (4) and the magnets (4a, 4b) respectively are in the form of permanent magnets.

19. Actuator (2) according to claim 18, **characterised in that** at least one of the permanent magnets is in the form of a rare-earth magnet.

20. Actuator (2) according to one of claims 1 to 17, **characterised in that** the magnet (4) and the magnets (4a, 4b) respectively are in the form of electromagnets.

21. Actuator (2) according to one of claims 3 to 20, **characterised in that** the core (10) is in the form of a double-T-shaped core (10), the longitudinal axis of which lies in the longitudinal axis of the coil (6).

## Revendications

1. Actionneur (2) qui comprend les éléments suivants :
- au moins un aimant (4a, 4b) ayant une direction de magnétisation prédéterminée,
- une bobine (6) électriquement conductrice dont l'axe longitudinal est orienté, dans une large mesure, perpendiculairement à la direction de magnétisation de l'aimant (4a, 4b), bobine par laquelle un courant électrique est excitable, où la bobine (6) est disposée de façon telle par rapport à l'aimant (4a, 4b), qu'il subsiste un entrefer (8) entre la bobine (6) et l'aimant (4a, 4b) et que, en regardant dans la direction longitudinale de la bobine (6), l'aimant (4a, 4b), dans l'état statique de l'actionneur (2), dépasse des extrémités de la bobine (6),
- un noyau ferromagnétique (10) de grande perméabilité autour duquel la bobine (6) est enroulée, lequel noyau ferromagnétique, en regardant dans la direction longitudinale de la bobine (6), se termine, au-dessus et au-dessous de la bobine (6), par des parties saillantes (12a, 12b) en forme de collerette en matière ferromagnétique ayant une grande perméabilité, où
- soit l'aimant (4a, 4b) est logé de façon statique, la bobine (6), y compris le noyau (10), étant logée de façon élastique, de manière telle que la bobine (6), y compris le noyau (10), peut effectuer des oscillations lorsqu'un courant alternatif est excité par la bobine (6),
- soit la bobine (6), y compris le noyau (10), est logée de façon statique, l'aimant (4a, 4b) étant logé de façon élastique, de manière telle qu'il peut effectuer des oscillations lorsqu'un courant alternatif est excité par la bobine (6),
**caractérisé en ce que**
- l'aimant (4a, 4b) est enrobé dans une cuirasse (14) ferromagnétique ayant une grande perméabilité, de sorte que l'actionneur présente exclusivement un entrefer entre la bobine (6) et l'aimant (4a, 4b), où la cuirasse (14) recouvre complètement au moins la surface (16) de l'aimant (4a, 4b), placée à l'opposé de la bobine (6) et, en regardant dans la direction longitudinale de la bobine (6), recouvre complètement la surface supérieure (18) et la surface inférieure (20) de l'aimant (4a, 4b).

2. Actionneur (2) selon la revendication 1, **caractérisé en ce qu'**il comprend les éléments suivants :
- un aimant (4) de forme annulaire comportant une magnétisation dans la direction radiale,
- une bobine (6) électriquement conductrice dont l'axe longitudinal est disposé en étant perpendiculaire à la direction radiale de la magnétisation et qui est entourée concentriquement par l'aimant (4) de forme annulaire, de façon telle qu'il subsiste un entrefer (8) entre l'aimant (4) et la bobine (6).

3. Actionneur (2) selon la revendication 1, **caractérisé en ce qu'**il comprend les éléments suivants :
- deux aimants (4a, 4b) en forme de parallélépipède rectangle, largement espacés l'un de l'autre, comprenant des faces frontales dont les verticales de surface indiquent la direction positive ou négative y, où la magnétisation de l'un des aimants (4a) indique la direction positive y, la magnétisation de l'autre aimant (4b) indiquant la direction négative y, et où chaque aimant (4a, 4b) est enrobé dans une cuirasse (14) ferromagnétique ayant une grande perméabilité, laquelle cuirasse recouvre, au moins par zones, la face frontale (16) de l'aimant (4a, 4b), placée à l'opposé de la bobine, et les surfaces (18, 20) de l'aimant (4a, 4b) dont les verticales de surface indiquent la position positive ou négative z, et
- une bobine (6) électriquement conductrice dont l'axe longitudinal est orienté dans la direction z, bobine par laquelle un courant électrique est excitable, où la bobine (6) est disposée de façon telle entre les aimants (4a, 4b), qu'il subsiste un entrefer (8a, 8b) entre la bobine (6) et chacun des aimants (4a, 4b).

4. Actionneur (2) selon l'une quelconque des revendications 1 à 3, **caractérisé en ce que** la bobine (6) est court-circuitée par un dispositif consommateur électrique réglable (72), en particulier par une résistance électrique réglable (72).

5. Actionneur (2) selon la revendication 4, **caractérisé en ce que**
- soit l'aimant enrobé ou les aimants enrobés (4a, 4b) est ou sont logé(s) de façon statique, la bobine (6), y compris le noyau (10), étant logée de façon élastique au moyen d'un palier (66) en élastomère,
- soit la bobine (6), y compris le noyau (10), est logée de façon statique, l'aimant enrobé ou les aimants enrobés étant logé(s) de façon élastique au moyen de paliers (66) en élastomère.

6. Actionneur (2) selon l'une quelconque des revendications 1 à 3, **caractérisé en ce que** l'aimant ou les aimants (4a, 4b) est ou sont logé(s) de façon statique, la bobine (6), y compris le noyau (10), étant logée de façon élastique à l'aide de ressorts en spirale (22a, 22b) dont les axes longitudinaux s'étendent en direction de l'axe longitudinal de la bobine (6).

7. Actionneur (2) selon l'une quelconque des revendications 1 à 3, **caractérisé en ce que** l'aimant ou les aimants (4a, 4b) est ou sont logé(s) de façon statique, la bobine (6), y compris le noyau (10), étant logée de façon élastique à l'aide de ressorts à lames (26, 28).

8. Actionneur (2) selon la revendication 7, **caractérisé en ce que**, en regardant dans la direction longitudinale de la bobine (6), au moins un ressort à lames (26, 28) est disposé au-dessus et au-dessous du noyau (10), lequel ressort à lames est, d'une part, relié mécaniquement au noyau (10) et, d'autre part, est solidement fixé sur le carter (24), dans un palier statique.

9. Actionneur (2) selon la revendication 7, **caractérisé en ce que**, en regardant dans la direction longitudinale de la bobine (6), au moins un ressort à lames (26, 28) est disposé au-dessus et au-dessous du noyau (10), lequel ressort à lames, dans la zone centrale, est relié mécaniquement au noyau (10) et est fixé au niveau de ses extrémités.

10. Actionneur (2) selon la revendication 9, **caractérisé en ce que** chaque ressort à lames (26, 28) est fixé dans un palier libre (44a, 44b), respectivement au niveau des extrémités.

11. Actionneur (2) selon la revendication 9, **caractérisé en ce que** chaque ressort à lames (26, 28) est solidement fixé au niveau de ses extrémités et est extensible dans sa direction longitudinale.

12. Actionneur (2) selon la revendication 7, **caractérisé en ce que**, en regardant dans la direction longitudinale de la bobine (6), un système de ressorts à lames est disposé respectivement au-dessus et au-dessous du noyau (10), lequel système de ressorts à lames se compose au moins de deux ressorts à lames (26, 28) qui, au niveau de leurs extrémités, sont reliés entre eux par une liaison mécanique active, où un ressort à lames (28) du système de ressorts à lames est respectivement en liaison mécanique active avec le noyau (10), l'autre ressort à lames (26) du système de ressorts à lames étant respectivement en liaison mécanique active avec un carter (24) de l'actionneur.

13. Actionneur (2) selon l'une quelconque des revendications 8 à 12, **caractérisé en ce que** les ressorts à lames (26, 28) disposés aussi bien au-dessus qu'au-dessous du noyau (10) sont reliés, en étant électriquement conducteurs, d'une part à la bobine (6) et d'autre part à la source de tension (36) par laquelle est produit le courant excité par la bobine.

14. Actionneur (2) selon l'une quelconque des revendications 1 à 3, **caractérisé en ce que** la bobine (6), y compris le noyau (10), est logée de façon statique, l'aimant enrobé ou les aimants enrobés (4a, 4b) étant logé(s) de façon élastique à l'aide de ressorts à lames (26, 28).

15. Actionneur (2) selon la revendication 3, **caractérisé en ce que**, en regardant dans la direction longitudinale de la bobine (6), au moins un ressort à lames (26, 28) est disposé au-dessus et au-dessous du noyau (10), ressort à lames dont une extrémité est en liaison mécanique avec le premier aimant enrobé (4a) et dont l'autre extrémité est en liaison mécanique avec le second aimant enrobé (4b), le ressort à lames étant fixé dans sa zone centrale.

16. AcLionneur (2) selon l'une quelconque des revendications 1 à 15, **caractérisé en ce que** le noyau ferromagnétique (10) et les cuirasses ferromagnétiques (14) se composent de tôles ferromagnétiques ayant une grande perméabilité, lesquelles tôles sont séparées les unes des autres par des couches isolantes.

17. Actionneur (2) selon la revendication 15, **caractérisé en ce que** les tôles sont des tôles électriques.

18. Actionneur (2) selon l'une quelconque des revendications 1 à 16, **caractérisé en ce que** l'aimant (4) ou les aimants (4a, 4b) sont conçus comme des aimants permanents.

19. Actionneur (2) selon la revendication 18, **caractérisé en ce qu'**au moins un des aimants permanents est conçu comme un aimant de terres rares.

20. Actionneur (2) selon l'une quelconque des revendications 1 à 17, **caractérisé en ce que** l'aimant (4) ou les aimants (4a, 4b) sont conçus comme des électroaimants.

21. Actionneur (2) selon l'une quelconque des revendications 3 à 20, **caractérisé en ce que** le noyau (10) est conçu comme un noyau (10) en forme de double T, noyau dont l'axe longitudinal se trouve dans l'axe longitudinal de la bobine (6).
